(19) Europäisches Patentamt
European Patent Office
Office européen des brevets

(11) EP 2 912 091 B1

(12) # FASCICULE DE BREVET EUROPEEN

(45) Date de publication et mention de la délivrance du brevet:
**22.02.2017 Bulletin 2017/08**

(21) Numéro de dépôt: **13792271.2**

(22) Date de dépôt: **24.10.2013**

(51) Int Cl.:
***C08G 59/32*** (2006.01) ***C08L 63/00*** (2006.01)

(86) Numéro de dépôt international:
**PCT/EP2013/072285**

(87) Numéro de publication internationale:
**WO 2014/064200 (01.05.2014 Gazette 2014/18)**

(54) **RESINES EPOXYDES RETICULABLES A TEMPERATURE AMBIANTE**

BEI RAUMTEMPERATUR VERNETZBARE EPOXIDHARZE

EPOXY RESINS CROSSLINKABLE AT ROOM TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2012 FR 1260197**

(43) Date de publication de la demande:
**02.09.2015 Bulletin 2015/36**

(73) Titulaires:
- **UNIVERSITE DE MONTPELLIER**
**34090 Montpellier (FR)**
- **Centre National de la Recherche Scientifique (C.N.R.S.)**
**75016 Paris (FR)**

(72) Inventeurs:
- **LAPINTE, Vincent**
**F-34160 Castries (FR)**
- **ULLOA HABAS, Amélia**
**F-34000 Montpellier (FR)**
- **GIANI, Olivia**
**F-34920 Le Cres (FR)**
- **HABAS, Jean-Pierre**
**F-34000 Montpellier (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**WO-A1-85/05215**
**GB-A- 1 122 082**
**GB-A- 1 401 677**
**US-A- 2 949 441**
**US-B1- 6 468 659**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 912 091 B1

Printed by Jouve, 75001 PARIS (FR)

## Description

La présente invention a pour objet de nouvelles résines époxydes à réactivité améliorée, leur procédé de formulation et de fabrication et leurs utilisations.

Les résines époxydes sont très largement utilisées aujourd'hui que ce soit dans le cadre d'applications industrielles ou domestiques. Elles sont par exemple déclinées comme adhésifs structuraux, bases de peintures à haute résistance mécanique ou encore comme matrices de matériaux composites en association avec des renforts de nature différente (carbonée, minérale, végétale) et de formes très diverses (particules, fibres longues ou courtes). Dans leur très grande majorité, ces résines sont dérivées de la chimie du pétrole. Ainsi, l'épuisement annoncé de cette ressource fossile mais également les problèmes sanitaires présentés par ces résines souvent à base de bisphénol A (DGEBA) ont motivé des recherches visant à explorer le développement de formulations à partir d'autres ressources.

Une piste prometteuse repose notamment sur l'utilisation d'huiles végétales présentant un fort taux d'insaturations et qui peuvent, par traitement chimique simple, être transformées en unités oxirane ou groupements époxy. L'huile végétale ainsi fonctionnalisée (i.e. époxydée) peut alors réagir avec les mêmes classes de durcisseurs que les résines époxy pétrochimiques à savoir les polyamines, les anhydrides d'acide, les diacides, les mercaptans ou encore les alcools. Mais, leur vitesse de réaction est indéniablement plus lente que celle rencontrée avec les résines pétrochimiques (DGEBA, DGEBF ou novolaques) pour le même type de durcisseur.

Ce recul de réactivité est une conséquence directe de la position centrale des groupements oxirane sur les chaînes grasses qui, de ce fait, ne peuvent pas présenter la même accessibilité vis à vis des unités réactives du durcisseur que celle proposée par les résines pétrochimiques susmentionnées pour lesquelles les groupements époxy sont situés idéalement à l'extrémité de chaînons (macro)moléculaires. La figure 1 illustre le schéma de réaction classique entre une huile époxydée et une diamine. La figure 2 décrit quant à elle le schéma de réaction classique entre une huile époxydée et un anhydride d'acide.

En outre, en considérant un seul et même durcisseur (i.e. nature, fonctionnalité inchangées) et pour un ratio « unités époxy »/ «unités réactives de durcisseur » constant, la structure aliphatique des huiles végétales époxydées induit quant à elle un retrait net des performances mécaniques du matériau réticulé en considérant toujours comme élément de comparaison les matrices pétrosourcées précédemment listées (DGEBA, DGEBF et novolaques...). En effet, ces dernières comportent de nombreux cycles aromatiques permettant une rigidité mécanique et une température de transition vitreuse plus élevées.

Ainsi Tan S. G. et al. (Polymer-Plastics Technology and Engineering, (2010) 49, 1581-1590) décrivent une résine thermodurcissable formulée par réaction d'huile de soja époxydée avec un anhydride méthylhexahydrophtalique (MHHPA) comme durcisseur et en présence de bromure de tétraéthylammonium comme catalyseur. Le mélange est placé dans un moule puis réticulé à 140 °C. La polymérisation est complète seulement au bout de 3 heures.

Gerbase A. E. et al. (J. Am. Oil Chem. Soc., (2002), 79, 797-802) rapportent les propriétés mécaniques de résines époxydes à base d'huile de soja obtenues par réaction de ladite huile de soja avec différents anhydrides d'acides cycliques en présence d'amines tertiaires. Les mélanges sont chauffés en général pendant 14 heures à 150 °C.

Boquillon N. et al. (Polymer, (2000), 41, 8603-8613) décrivent les propriétés de résines époxydes obtenues par réaction d'huile de lin époxydée avec différents durcisseurs de type anhydride en présence de différents catalyseurs. Le cycle de traitement est de 15 heures à 150 °C puis de 1 heure à 170 °C. La formulation du mélange huile de lin/anhydride tétrahydrophtalique (THPA)/2-méthylimidazole conduit à des résines présentant après réticulation les meilleures propriétés mécaniques.

Chrysanthos M. et al. (Polymer, (2011), 52, 3611-3620) décrivent des résines biosourcées dérivées de diglycidyl éther de l'isosorbide époxydé d'origine végétale en remplacement du DGEBA. Le durcisseur utilisé est l'isophorone diamine pétrosourcée et le cycle de traitement est de 1 heure à 80 °C suivi de 2 heures à 180 °C.

La demande internationale WO 2008/147473 concerne des polymères biosourcés obtenus par la réaction d'une résine à base de glycidyl éthers d'anhydrosucres d'origine végétale, comme par exemple l'isosorbide, l'isomannide ou l'isoidide avec un durcisseur d'origine biosourcée ou non. Lorsque l'étape de réticulation est réalisée à des températures comprises entre 100 °C et 150 °C, elle dure environ 3 heures ; lorsqu'elle est réalisée à des températures très élevées, de l'ordre de 250 °C, elle dure 30 minutes. Les essais de réticulation à température ambiante montrent qu'il faut 24 heures pour obtenir une réticulation complète.

La demande internationale WO 2010/136725 concerne un procédé de préparation de résines thermodurcissables époxydes formulées à partir de composés phénoliques naturels époxydés et d'un durcisseur. Ces composés phénoliques sont issus de la biomasse notamment de végétaux, d'algues, de fruits, ou d'arbres. Le durcisseur est un composé porteur de fonctions amines primaires ou secondaires comme par exemple des composés cycloaliphatiques, notamment l'Epamine PC 19. Ces résines sont réticulées à température ambiante sur des durées de plusieurs heures.

Liu et al. (Journal of Agricultural and Food Chemistry (2006), 54, 2134-2137), décrivent des formulations époxy réalisées par le mélange d'huile de soja époxydée et de 1,1,1-tris(4-hydroxyphényl)éthane triglycidyléther (THPE-GE) avec un ratio massique 1:0,33 en présence d'une polyamine, la triéthylène tétramine (TETA), utilisée comme agent de

réticulation. THPE-GE est dosé en considérant constant le rapport du nombre de groupements NH sur le nombre de fonctions époxy du seul dérivé lipidique époxydé et les temps de réticulation à 100 °C sont très longs (environ 24 heures) et leurs propriétés mécaniques ne sont pas excellentes.

La demande GB 1 401 677 décrit des résines époxydes comprenant le produit de réaction d'un mélange comprenant un réactif non biosourcé non polymère et porteur d'au moins 3 fonctions époxy terminales et d'au moins un agent de réticulation de la famille des amines ou des anhydrides, le rapport entre le nombre de fonctions réactives de l'agent de réticulation et le nombre de fonctions époxy étant très inférieur à 1. GB 1 401 677 décrit aussi des résines époxydes pour lesquelles les fonctions époxydes sont apportées à la fois par un réactif non biosourcé non polymère et porteur d'au moins 3 fonctions époxy terminales et par un diglycidyl éther de bisphénol A. Ces résines sont réticulées à des températures supérieures à la température ambiante

Des résines pétrosourcées susceptibles de réticuler à température ambiante ont également été décrites mais les temps de réticulation sont très longs, de l'ordre de plusieurs jours et le rapport groupes anhydride/groupes époxy est toujours inférieur à 1. Ainsi, le brevet US 6 468 659 décrit des résines comprenant le produit de la réaction de deux composants susceptibles d'être réticulés à température ambiante, le premier composant étant un dérivé porteur de groupes époxy, notamment la 4,4'-méthylènebis(N,N-diglycidylaniline) et le O,N,N-triglycidyl-4-aminophénol et le second composant étant un anhydride cyclique ; la demande internationale WO 85/05215 décrit des résines époxydes comprenant notamment le produit de réaction d'un mélange comprenant une amine aromatique polyglycidique qui peut être la diglycidylaniline et un acide anhydrique polycarboxylique qui peut être l'anhydride méthyl tétrahydrophtalique.

Des résines biosourcées ont également été décrites. Ainsi US 2 949 441 décrit un procédé de préparation de résine à partir d'huiles végétales époxydées, ledit procédé comprenant la réaction de ces composés avec au moins 0,8 équivalents d'un anhydride polycarboxylique en présence de moins de 10 % d'amines, un équivalent étant défini comme étant la quantité nécessaire pour fournir un groupe anhydride par groupe époxy. Du fait du recul de la réactivité et des performances mécaniques finales lié à la faible réactivité des systèmes porteurs de fonctions époxy « internes » comparativement à celle des prépolymères époxy pétrochimiques porteurs de fonctions réactives terminales, il est nécessaire, pour améliorer la réactivité des dérivés lipidiques, d'utiliser des amines tertiaires comme catalyseurs en présence d'un durcisseur de type anhydride. Néanmoins, dans ces conditions, les réactions sont effectivement accélérées mais les températures de réticulation restent très supérieures à l'ambiante (T > 100 °C).

US 6 468 659 décrit des résines comprenant le produit de la réaction d'au moins deux composants susceptibles d'être réticulés à température ambiante, le premier composant étant un dérivé porteur de groupes époxy et le second composant étant un anhydride cyclique. Aucun dérivé lipidique n'est présent au sein des différentes formulations proposées. Ces résines seraient susceptibles de durcir à la température ambiante sur une durée de quelques jours à quelques semaines mais aucun exemple de donne de tels résultats.

WO 85/05215 décrit des résines époxydes comprenant le produit de réaction d'un mélange comprenant un réactif non biosourcé non polymère et porteur d'au moins 3 fonctions époxy terminales et d'au moins un agent de réticulation, le rapport entre le nombre de fonctions réactives de l'agent de réticulation et le nombre de fonctions époxy étant inférieur à 1. Aucun dérivé lipidique n'est présent au sein des différentes formulations proposées. Ces résines sont réticulables à température ambiante sans que la durée nécessaire à la réticulation soit précisée

GB 1401677 décrit des résines époxydes comprenant le produit de réaction d'un mélange comprenant un réactif non biosourcé non polymère et porteur d'au moins 3 fonctions époxy terminales et d'au moins un agent de réticulation de la famille des amines ou des anhydrides, le rapport entre le nombre de fonctions réactives de l'agent de réticulation et le nombre de fonctions époxy étant très inférieur à 1 ou stoechiométrique. Ces résines sont réticulées à des températures supérieures à la température ambiante. Toutefois aucune mention n'est faite d'une huile époxydée ou d'un dérivé lipidique époxydé.

US2949441 décrit un procédé de préparation de résine à partir de composés porteurs de fonction époxy, notamment des huiles végétales époxydées, ledit procédé comprenant la réaction de ces composés avec au moins 0,8 équivalents d'un anhydride polycarboxylique en présence de moins de 10 % d'amines, un équivalent étant défini comme étant la quantité nécessaire pour fournir un groupe anhydride par groupe époxy. Aucun mélange ternaire n'est décrit et cette demande démontre uniquement la plus-value apportée par les amines tertiaires utilisées en tant que catalyseur dans la réticulation de mélanges formés par des huiles végétales époxydées avec des durcisseurs de type anhydride.

GB1122082 décrit des compositions contenant des polyglycidyl éthers et leur procédé de préparation qui comprend la réaction de l'huile de ricin avec une épihalochlorhydrine dans des proportions particulières, en présence d'un catalyseur, suivie d'une étape de déhalogénisation. Il n'est pas fait état d'un réactif non biosourcé porteur d'au moins trois fonctions epoxy.

Aussi, il est nécessaire d'améliorer en termes de temps et de température la réticulation de résines époxydes à base d'huiles végétales.

Le but de la présente invention est donc de proposer une large gamme de résines basées sur des huiles naturelles et présentant une très forte réactivité donc capables de réticuler à température ambiante et sur des temps de polymérisation courts tout en offrant un surcroit de propriétés mécaniques.

Un autre objectif de la présente invention est de pouvoir contrôler la réticulation de ces résines en termes de temps et de température.

Un objectif supplémentaire est de pouvoir ajuster les propriétés finales de ces résines en regard d'une application ciblée.

Ces objectifs sont atteints par la présente invention qui fournit des résines issues d'huiles naturelles formulées en présence d'un co-réactif d'origine non-biosourcée.

Les inventeurs, ont montré au cours de leurs recherches, qu'il faudrait contrebalancer les défauts inhérents aux huiles époxydées par l'ajout de co-réactifs époxydés pétrosourcés affichant les caractéristiques suivantes :

- une disposition des sites époxy plus favorable à la réaction avec les unités du durcisseur,
- une fonctionnalité supérieure ou égale à 3 notamment au travers d'une structure ramifiée afin de produire le réseau tridimensionnel plus rapidement (temps de gel plus court),
- des petites branches moléculaires porteuses des unités oxirane qui vont entrainer une réduction de la taille moyenne de la maille du réseau moléculaire par rapport au mélange binaire « huile-durcisseur » et donc induire un surcroit de performances (rigidité mécanique accrue, Tg plus élevée),
- si possible, un coeur central rigide de type aromatique ou cyclique pour renforcer le point précédent.

Aussi au cours de ces travaux, les inventeurs ont utilisé des molécules époxydées pétrosourcées capables d'afficher des unités oxirane très accessibles à l'extrémité de segments moléculaires de faible taille. Ces molécules ne présentent aucun motif de répétition et ne peuvent donc pas être qualifiées d'oligomères et encore moins de polymères. Elles sont basées sur une structure comportant au moins trois branches de taille réduite, chacune étant porteuse d'une terminaison oxirane aisément accessible aux unités réactives du durcisseur.

L'ajout de ces petites molécules époxydes ramifiées très réactives à la formulation oléagineuse, formée par le mélange d'une ou plusieurs huiles époxydées avec un ou plusieurs durcisseurs, réduit le temps de gel dudit mélange alors que la température de transition vitreuse (Tg) du matériau final est augmentée. Dans ce cas, on appelle ces petites molécules époxydes ramifiées, co-réactifs. L'amplitude de ces deux dernières évolutions est directement liée à la nature même du co-réactif, sa fonctionnalité mais également sa proportion dans le mélange réactionnel.

Les inventeurs ont également montré que ces molécules époxydes seules peuvent réagir directement avec un ou plusieurs durcisseurs en l'absence d'huile époxydée pour donner un matériau final présentant des propriétés intéressantes.

Aussi la présente invention a pour objet des résines époxydes comprenant le produit de réaction d'un mélange comprenant :

- au moins un réactif non biosourcé non polymère et porteur d'au moins 3 fonctions époxy terminales ($CR_x$),
- au moins un dérivé lipidique époxydé biosourcé, et
- au moins un agent de réticulation,

le rapport entre le nombre de fonctions réactives de l'agent de réticulation et le nombre de fonctions époxy étant maintenu constant indépendamment de la constitution du mélange, à condition que :

- $CR_x$ ne soit pas un composé ayant la formule (a) suivante :

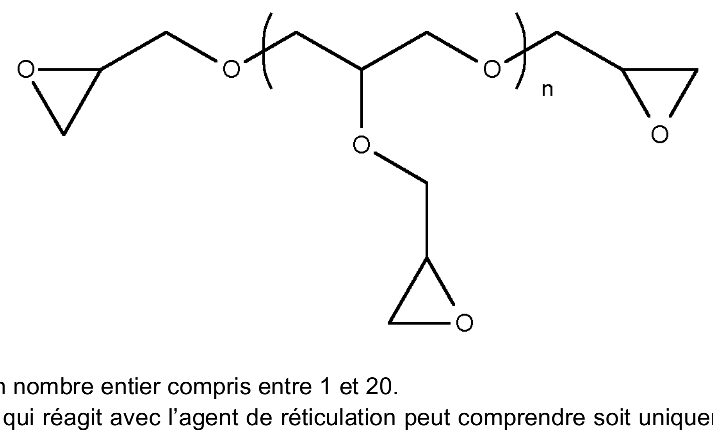

(a)

dans laquelle n est un nombre entier compris entre 1 et 20.

Le mélange qui réagit avec l'agent de réticulation peut comprendre soit uniquement un ou plusieurs réactifs non biosourcés non polymères et porteurs d'au moins 3 fonctions époxy terminales, ($CR_x$), soit, conformément à l'invention, au moins un réactif non biosourcé non polymère et porteur d'au moins 3 fonctions époxy terminales ($CR_x$) et

un ou plusieurs dérivés lipidiques époxydés biosourcés. Le mélange ne peut jamais contenir uniquement des dérivés lipidiques époxydés biosourcés comme source de fonctions époxy. Dans tous les cas, le rapport entre le nombre de fonctions réactives de l'agent de réticulation et le nombre de fonctions époxy est maintenu constant, que les fonctions époxy soient apportées uniquement par un ou plusieurs réactifs non biosourcés non polymères ($CR_x$) ou par un mélange de un ou plusieurs réactifs non biosourcés non polymères ($CR_x$) et de dérivés lipidiques époxydés biosourcés.

Dans les résines selon l'invention, le au moins un réactif non biosourcé non polymère et porteur d'au moins 3 fonctions époxy terminales ($CR_x$) est utilisé en complément ou substitution des groupements époxy du dérivé lipidique époxydé. Lorsqu'il est utilisé en complément ou en substitution des groupements époxy du dérivé lipidique époxydé on parle dans ce cas de co-réactif.

On appelle Q, le rapport

$$\frac{\text{nombre de groupements réactifs de l'agent de réticulation dans le mélange}}{\text{nombre de groupements époxy dans le mélange}}$$

lesdits groupements époxy étant portés soit par le ou les dérivés lipidiques et le au moins un réactif non biosourcé non polymère ($CR_x$) ou uniquement par le réactif non biosourcé non polymère($CR_x$) lorsqu'il est utilisé seul.

Au sens de la présente invention, on entend par «agent de réticulation» ou «durcisseur», un composé qui réagit avec les fonctions époxydes pour permettre la création d'un réseau polymère tridimensionnel. On parle alors de réticulation.

Au sens de la présente invention, on entend par «résines époxydes», ou « résines époxydées » ou «résines époxy», le produit de la réaction d'un composé époxydé avec un agent de réticulation. Des résines époxydes sont des exemples de résines thermodurcissables.

Conformément à l'invention, on entend par «composé époxydé», un composé dans lequel on a introduit plusieurs groupements époxydes. Un composé époxydé peut également être appelé « époxyde » ou «oxiranique» ou encore «époxy».

On entend par «fonction époxyde» ou «groupement époxy» ou «fonction oxirane» ou «groupement oxirane» une fonction cyclique à trois chainons possédant deux carbones et un atome d'oxygène.

Au sens de la présente invention, on entend par «groupements chimiques réactifs de l'agent de réticulation» tout groupement ou fonction chimique capable de réagir par établissement de liaisons covalentes avec les groupements époxy des dérivés lipidiques ou du réactif non biosourcé non polymère ($CR_x$).

Au sens de la présente invention on entend par réactif non biosourcé, un réactif non-issu de la biomasse.

Dans un mode de réalisation avantageux de l'invention, le au moins un $CR_x$ répond :

a. à la formule (Ia),

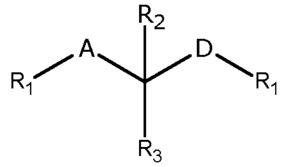

(Ia)

dans laquelle

- A et D représentent chacun indépendamment l'un de l'autre :

  o un radical $-(C_nH_{2n})-$ où n est compris entre 1 et 5, notamment un radical $-CH_2-$ ou
  o un radical arylène, notamment un radical phénylène ($-C_6H_4-$), ou
  o un groupe $-(CH_2)_l-O-(CH_2)_m-[CH(CH_3)]_p-OR$ où l et m, identiques ou différents, sont des entiers compris entre 1 et 5, pouvant donc être égaux, indépendamment l'un de l'autre, à 0, 1, 2, 3, 4 ou 5, p est un entier compris entre 0 et 1, et R est un groupe

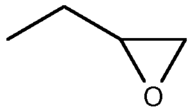

- $R_1$ représente un groupe -OR, où R est tel que défini précédemment
- $R_2$ et $R_3$ représentent chacun indépendamment l'un de l'autre,

  o soit un atome d'hydrogène,
  o soit un groupe $(C_1\text{-}C_5)$alkyle linéaire ou ramifié,
  o soit un groupe -OR, où R est tel que défini précédemment,
  o soit un groupe $-CH_2OR$, où R est tel que défini précédemment,
  o soit un groupe $-C_6H_4OR$, où R est tel que défini précédemment,
  o soit un groupe $-O-(CH_2)_r-[CH(CH_3)]_s-OR$ linéaire ou ramifié, où r est un entier compris entre 1 et 5, pouvant donc être égal à 1, 2, 3, 4 ou 5 et s est un entier compris entre 0 et 1 et R est tel que défini précédemment,

à condition que le composé de formule

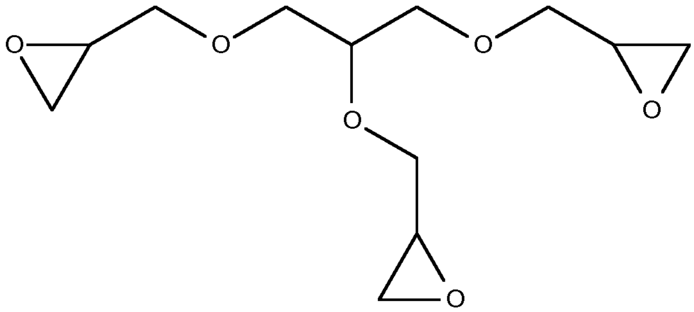

soit exclu, ou
b. à la formule (Ib)

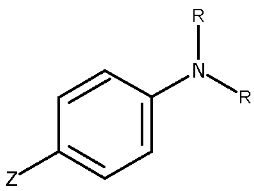

(Ib)

dans laquelle

- Z représente

  o soit un groupe OR où R est tel que défini précédemment,
  o soit un groupe

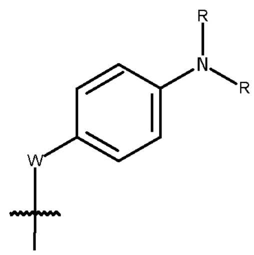

où W est choisi dans le groupe comprenant les atomes d'oxygène et de soufre et les radicaux $-(C_nH_{2n})-$ linéaire ou ramifié où n est compris entre 1 et 5, pouvant donc être égal à 1, 2, 3, 4 ou 5 et $-SO_2-$ et R est

tel que défini précédemment

Au sens de la présente invention, on entend par radical $-(C_nH_{2n})-$ un groupe divalent dérivé d'une chaîne carbonée comprenant de 1 à 5 atomes de carbone. On peut citer à titre d'exemple, les groupes $-CH_2-$ (radical méthylène), $-CH_2CH_2-$ (radical éthylène), $-CH(CH_3)-$, $-C(CH_3)_2-$ ,$-CH_2-CH(CH_3)-$ $-CH_2-C(CH_3)_2$, $-CH_2CH_2CH_2-$ (radical propylène), $-CH_2CH_2C(CH_3)_2-$ (radical isopropylène), $-CH_2CH_2CH_2CH_2-$ (radical butylène), $-CH_2CH(CH_3)CH_2-$ $-CH_2C(CH_3)_2CH_2-$ (radical diméthylpropylène) et $-CH_2CH_2CH_2CH_2CH_2-$ (radical pentylène).

Au sens de la présente invention, parmi les groupes $-(CH_2)_l-O-(CH_2)_m-[CH(CH_3)]_p-OR$ où l et m, identiques ou différents, sont des entiers compris entre 1 et 5, pouvant donc être égaux, indépendamment l'un de l'autre, à 0, 1, 2, 3, 4 ou 5, p est un entier compris entre 0 et 1, et R est tel que défini précédemment, on peut citer les groupes $-CH_2-O-CH_2-CH(CH_3)-OR$ ou encore $-CH_2-OR$.

Au sens de la présente invention parmi les groupes $-O-(CH_2)_r-[CH(CH_3)]_s-OR$ où r est un entier compris entre 1 et 5, pouvant donc être égal à 1, 2, 3, 4 ou 5 et s est un entier compris entre 0 et 1 et R est tel que défini précédemment, on peut citer les groupes $-O-CH_2-OR$, $-O-(CH_2)_2-OR$, $-O-(CH_2)_3-$ OR, $-O-(CH_2)_4-OR$, $-O-(CH_2)_5-OR$, $-O-CH(CH_3)-OR$, $-O-CH_2-CH(CH_3)-OR$.

On entend par groupe arylène un groupe divalent dérivé d'un groupe aryle comprenant de 6 à 10 atomes de carbone. On peut citer à titre d'exemple les radicaux $-C_6H_4-$ (radical phénylène) et $-C_{10}H_8-$ (radical naphtylène).

Dans un mode de réalisation avantageux de l'invention le au moins un CRx répond à la formule (Ia) dans laquelle :

- A et D représentent chacun un groupe $-CH_2-$, $R_2$ représente soit un atome d'hydrogène, soit un groupe $-CH_2OR$, $-C_6H_4OR$ où R est tel que défini précédemment et
- $R_3$ représente un groupe méthyle, éthyle, $-CH_2OR$ ou $-O-CH_2-CH(CH_3)-OR$ où R est tel que défini précédemment,

à condition que le composé de formule

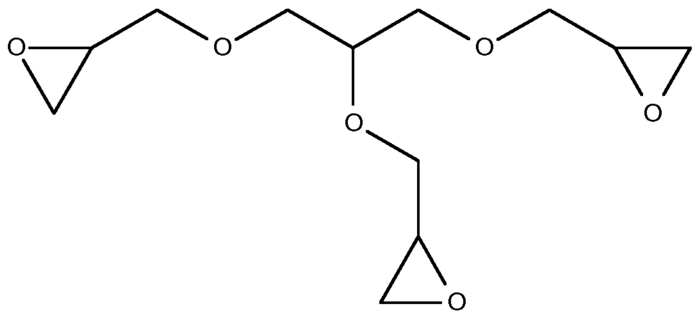

soit exclu.

Dans un autre mode de réalisation avantageux de l'invention le au moins un $CR_x$ répond à la formule (Ia) dans laquelle :

- A et D représentent chacun un groupe $-(C_6H_4)-$,
- $R_2$ représente un atome d'hydrogène ou un groupe méthyle et
- $R_3$ représente un groupe $-C_6H_4OR$ où R est tel que défini précédemment.

On peut notamment citer à titre d'exemple de $CR_x$ de formule (Ia) le composé de formule (CR3)

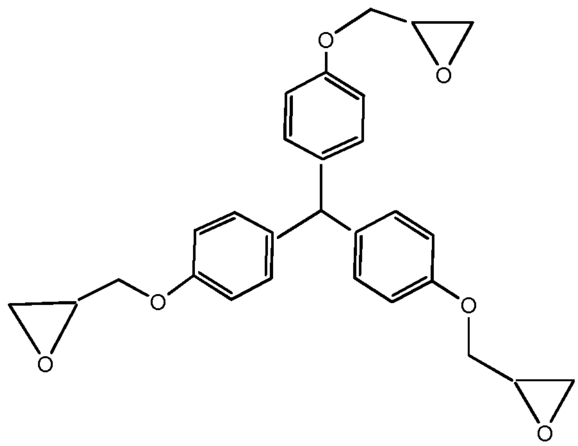

Dans un autre mode de réalisation avantageux de l'invention le au moins un $CR_x$ répond à la formule (Ib) dans laquelle Z représente soit un groupe OR où R est tel que défini précédemment, soit un groupe

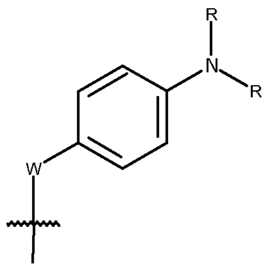

où W est radical $-CH_2-$.

On peut notamment citer à titre d'exemple le composé de formule (CR1)

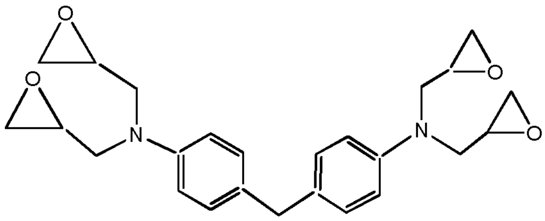

et le composé de formule CR2

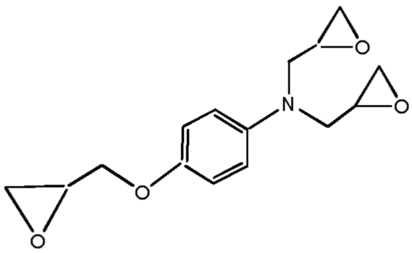

Ces molécules ($CR_x$) sont qualifiées de réactives car elles reposent sur le même mécanisme de réaction vis à vis des unités réactives du durcisseur que celui décrit à l'origine pour les seules unités époxy portées par les chaines grasses. En d'autres termes, elles ne doivent pas être confondues avec un simple catalyseur même s'il n'existe qu'un seul réseau macromoléculaire. En présence de chaîne grasse, la structure initiale ramifiée des molécules de co-réactif contribue elle aussi à la croissance rapide tridimensionnelle du réseau polymère. On parle alors de co-réactif. La taille

réduite de chaque branche est, en complément éventuel d'une rotule centrale aromatique, le garant d'une maille moyenne de réseau plus rigide. Ce dernier point est le facteur à l'origine de l'augmentation de la température de transition vitreuse du matériau réticulé et plus globalement de l'accroissement de ses propriétés mécaniques. Ces réactifs autorisent la déclinaison d'une large gamme de résines époxydes à base d'huile végétale et capables de réticuler à température ambiante sur des temps de polymérisation courts tout en offrant un surcroit de propriétés mécaniques.

Dans un mode de réalisation avantageux de l'invention, le un ou plusieurs dérivés lipidiques époxydés biosourcés sont :

◦ soit extraits d'une huile végétale naturelle, notamment l'huile de vernolia, dans laquelle ils sont présents sous forme époxydée,
◦ soit obtenus par époxydation de lipides extraits d'huiles végétales naturelles choisies dans le groupe comprenant l'huile de lin, de chanvre, de tournesol, de colza, de soja, d'olive, de pépins de raisin, de bois de Tung, de coton, de maïs, de noisette, de noix de coco, de palme, de ricin, de noix de cajou et d'arachide et le mélange de celles-ci ou extraits d'huiles animales.

En effet une huile végétale peut être définie comme un produit statistique composé majoritairement de triglycérides mais également dans une moindre mesure, de diglycérides et de monoglycérides. La structure des unités triglycérides peut être résumée au greffage de trois esters d'acides gras sur une unité glycérol. On qualifie de chaînes grasses insaturées celles qui sont porteuses de doubles liaisons carbone-carbone (C=C). La présence des insaturations dans les chaines grasses est particulièrement intéressante car ces dernières peuvent être transformées en unités oxirane par utilisation de péracides ou de péroxyde d'hydrogène. Cette étape est également désignée sous le terme d'époxydation. Quelques exemples de chaines grasses insaturées sont rassemblés dans le tableau 1.

**Tableau 1**

| Acide gras | Formule chimique |
|---|---|
| Acide palmitoléïque | $CH_3(CH_2)_5CH=CH(CH_2)_7COOH$ |
| Acide oléique | $CH_3(CH_2)_7CH=CH(CH_2)_7COOH$ |
| Acide linoléïque | $CH_3(CH_2)_4CH=CH-CH_2-CH=CH(CH_2)_7COOH$ |
| Acide linolénique | $CH_3-CH_2-CH=CH-CH_2-CH=CH-CH_2-CH=CH(CH_2)_7COOH$ |
| Acide éléostéarique | $CH_3-(CH_2)_3-CH=CH-CH=CH-CH=CH(CH_2)_7COOH$ |
| Acide ricinoléïque | $CH_3-(CH_2)_4CH-CH(OH)-CH_2-CH=CH(CH_2)_7COOH$ |

Conformément à l'invention, le au moins un agent de réticulation est choisi :

a. dans le groupe comprenant des composés porteurs de fonctions amines, lesdits composés lorsqu'ils sont porteurs de fonctions amines primaires étant choisis dans le groupe comprenant les diamines, les polyamines et leurs mélanges ou
b. dans le groupe des anhydrides d'acides ou
c. dans le groupe des diacides et des polyacides ou
d. dans le groupe des alcools y compris les phénols ou
e. dans le groupe des polymercaptans ou
f. dans le groupe comprenant les mélanges d'au moins deux agents choisis dans ceux mentionnés en a) à e).

Parmi les durcisseurs ou agents de réticulation de type diamine on peut citer :

- les diamines aliphatiques de forme générique $H_2N-Ra-NH_2$ où Ra est une chaine aliphatique, d'origine non biosourcée comme l'éthylènediamine, l'hexaméthylènediamine, la bis(3-aminopropyl)amine et la 1,10-décanediamine ou d'origine biosourcée comme la 1,4-butanediamine, la 1,5-pentanediamine, la 1,12-dodécanediamine et la 1,18-octadécanediamine.
- les diamines cycloaliphatiques de forme générique $H_2N-Rb-NH_2$ où Rb est à la base une unité cyclique aliphatique comme l'isophorone diamine (IPDA).
- les diamines aromatiques de forme générique $H_2N-Rc-NH_2$ où Rc est à la base formé par un cycle aromatique comme la phénylènediamine sous ses formes ortho, méta, para, la xylylènediamine sous ses formes ortho, méta, para, le 2,5-diaminotoluène, le 4,4'-diaminobisphényle et le 4,4'-diaminodiphénylméthane.

- les polyamines comme la diéthylènetriamine, la triéthylènetétramine, la tétraéthylènepentamine, la poly(oxypropylène) triamine ou encore des polyétheramines.

On peut citer à titre d'exemple d'anhydrides d'acides, les molécules suivantes : anhydride succinique, anhydride maléique, anhydride dodécénylsuccinique, anhydride phtalique, anhydride hexahydrophtalique, anhydride méthylhexahydrophtalique, anhydride méthyl tétrahydrophtalique, anhydride méthyl-endo-méthylènetétrahydrophtalique.

On peut citer à titre d'exemple de diacides les molécules suivantes : acide heptanedioïque $HOOC-(CH_2)_5-COOH$ ; acide phtalique ; acide isophtalique ; acide fumarique, acide maléique, acide téréphtalique, acide succinique, acide itaconique, acide hexahydrophtalique, acide méthyl hexahydrophtalique, acide tétrahydrophtalique, acide méthyl tétrahydrophtalique, et acide pyromellitique

On peut citer à titre d'exemple de polymercaptans ou polythiols, les molécules suivantes : 1,2,5-trimercapto-4-thiapentane, 3,3-dimercaptométhyl-1,5-dimercapto-2,4-dithiapentane, 3-mercaptométhyl-1,5-dimercapto-2,4-dithiapentane, 3-mercaptométhylthio-1,7-dimercapto-2,6-dithiaheptane, 1,2,7-trimercapto-4,6-dithiaheptane, 3,6-dimercaptométhyl-1,9-dimercapto-2,5,8-trithianonane, 1,2,9-trimercapto-4,6,8-trithianonane, 3,7-dimercaptométhyl-1,9-dimercapto-2,5,8-trithianonane, 4,6-dimercaptométhyl-1,9-dimercapto-2,5,8-trithianonane, 3-mercaptométhyl-1,6-dimercapto-2,5-dithiahexane, 3-mercaptométhylthio-1,5-dimercapto-2-thiapentane, 1,1,2,2-tétrakis(mercapto méthylthio)éthane, 1,1,3,3-tétrakis(mercaptométhylthio)propane, 1,4,8,11-tétramercapto-2,6,10-trithiaundécane, 1,4,9,12-tétramercapto-2,6,7,11-tétrathiadodécane, 2,3-dithia-1,4-butanedithiol, 2,3,5,6-tétrathia-1,7-heptanedithiol, 2,3,5,6,8,9-hexathia-1,10-décanedithiol

Dans un autre mode de réalisation particulier de l'invention, lorsque le au moins un agent de réticulation est un composé porteur de groupements N-H, appartenant à des fonctions amines primaires ou secondaires, le rapport $Q_{NH}$ :

$$Q_{NH} = \frac{\text{nombre de groupements N-H}}{\text{nombre de groupements époxy dans le mélange portés soit par le ou les dérivés lipidiques et le au moins un réactif non biosourcé non polymère ou par le réactif non biosourcé non polymère lorsqu'il est utilisé seul}}$$

est avantageusement tel qu'à chaque groupement époxy correspond 1 groupement N-H. Cela équivaut à dire que le rapport du nombre de groupements N-H sur le nombre de groupements époxy est égal à l'unité.

Dans un autre mode de réalisation particulier de l'invention lorsque le au moins un agent de réticulation est un composé porteur de groupements anhydride d'acide, le rapport $Q_{anhydride}$

$$Q_{anhydride} = \frac{\text{nombre de groupements anhydride d'acide}}{\text{nombre de groupements époxy portés soit par le ou les dérivés lipidiques et le au moins un réactif non biosourcé non polymère ou par le réactif non biosourcé non polymère lorsqu'il est utilisé seul}}$$

est avantageusement tel qu'à chaque groupement époxy correspond 1 groupement anhydride d'acide. Cela équivaut à dire que le rapport du nombre de groupements anhydride d'acide sur le nombre de groupements époxy est égal à l'unité.

Le rapport $Q_{SH}$ pour les agents de réticulation porteurs de groupements SH ou le rapport $Q_{diacide}$ pour les agents de réticulation de la famille des diacides sont calculés de la même façon.

Dans le cas où le rapport $Q_{NH}$, $Q_{anhydride}$, $Q_{SH}$ ou $Q_{diacide}$ est différent de 1, la réaction entre le composé époxy et l'agent de réticulation reste possible. L'homme du métier saura définir la stoechiométrie optimale de manière à obtenir

un matériau capable de satisfaire les exigences techniques de l'application visée.

Le ou les dérivés lipidiques époxydés représentent de 0 à 99 %, avantageusement selon l'invention de 1 à 99 % en termes de nombre de fonctions époxy, des dérivés porteurs de fonction époxy et le ou les $CR_x$, de 100 à 1 %, avantageusement selon l'invention de 99 à 1 % en terme du nombre de fonctions époxy, des dérivés porteurs de fonction époxy. Ainsi, dans un mélange 80-20, 80 % des fonctions époxy sont apportées par un ou plusieurs dérivés lipidiques et 20 % par un ou plusieurs $CR_x$ ; dans un mélange 50-50, 50 % des fonctions époxy sont apportées par un ou plusieurs dérivés lipidiques et 50 % par un ou plusieurs $CR_x$ ; dans un mélange 20-80, 20 % des fonctions époxy sont apportées par un ou plusieurs dérivés lipidiques et 80 % par un ou plusieurs $CR_x$.

Les résines selon l'invention peuvent en outre contenir des additifs usuels dans le domaine comme par exemple des diluants, des solvants, des pigments, des charges, des plastifiants, des anti-oxydants, des stabilisants. Ces additifs peuvent être ou non biosourcés.

Un procédé de formulation de résines époxydes comprend le mélange :

- d'au moins un dérivé porteur de fonction époxy choisi dans le groupe constitué par les réactifs non biosourcés non polymères et porteurs d'au moins 3 fonctions époxy terminales ($CR_x$) et les dérivés lipidiques époxydés biosourcés, et
- d'au moins un agent de réticulation,

le rapport entre le nombre de fonctions réactives de l'agent de réticulation et le nombre de fonctions époxy étant maintenu constant indépendamment de la constitution du mélange, à condition que :

- ledit réactif non biosourcé, non polymère ne soit pas un composé ayant la formule (a) suivante :

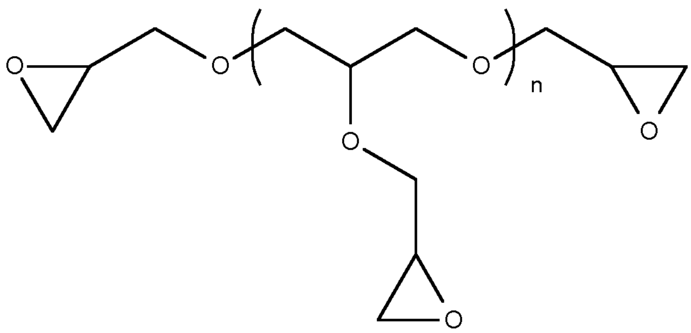

(a)

dans laquelle n est un nombre entier compris entre 1 et 20 et que

- au moins un réactif non biosourcé, non polymère soit toujours présent dans le mélange.

La présente invention a également pour objet un procédé de formulation de résines époxydes comprenant le mélange :

- d'au moins un réactif non biosourcé non polymère et porteur d'au moins 3 fonctions époxy terminales ($CR_x$),
- d'au moins un dérivé lipidique époxydé biosourcé, et
- d'au moins un agent de réticulation,

le rapport entre le nombre de fonctions réactives de l'agent de réticulation et le nombre de fonctions époxy étant maintenu constant indépendamment de la constitution du mélange, à condition que :

- ledit réactif non biosourcé, non polymère ne soit pas un composé ayant la formule (a) suivante :

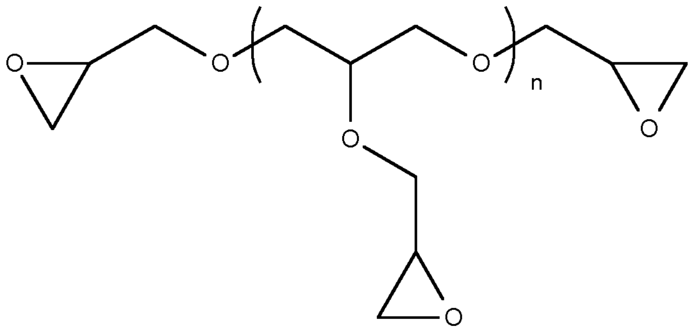

(a)

- dans laquelle n est un nombre entier compris entre 1 et 20

Dans un mode de réalisation avantageux de l'invention, le procédé comprend les étapes suivantes :

a. mélanger un ou plusieurs dérivés lipidiques époxydés biosourcés,
b. ajouter le au moins un $CR_x$ puis procéder à un brassage pour obtenir un mélange époxy homogène,
c. ajouter l'agent de réticulation au dit mélange puis procéder à un nouveau brassage,
d. laisser alors réagir la résine.

Les brassages aux étapes b) et c) peuvent être réalisés par toute technique connue de l'homme du métier, notamment par brassage mécanique. La durée du brassage à l'étape b) est de l'ordre de 1 à 5 minutes et est facilement déterminée par l'homme du métier. La durée du brassage à l'étape c) est de l'ordre d'une minute.

L'étape d) est réalisée dans les conditions de temps et température déterminées par la conduite préalable d'expériences classiquement affectées à l'optimisation de la réticulation d'un polymère thermodurcissable (mesures calorimétriques différentielles ou DSC, rhéométrie en régime permanent ou oscillatoire, techniques diélectriques...).

L'agent de réticulation et $CR_x$ peuvent être sous forme solide ou liquide. Lorsque l'agent de réticulation et/ou $CR_x$ sont sous forme solide, il est préférable de préchauffer séparément chaque constituant de la formulation à une température permettant la fusion de tous les composés. Cette précaution garantit l'homogénéité du futur mélange. Une fois cette température atteinte, $CR_x$ peut être ajouté à l'huile, suivi de l'agent de réticulation en respectant les étapes b) à d) décrites précédemment.

Avec le procédé de l'invention, les gains en termes de température et/ou de temps nécessaires à l'opération de réticulation sont très importants par rapport aux procédés couramment utilisés. Ainsi, la résine peut être durcie en moins de 10 minutes à 80°C, avantageusement en moins de 5 minutes.

Dans un autre mode de réalisation de l'invention, le procédé peut également être réalisé en présence d'un catalyseur si cela s'avère nécessaire. Dans ce cas les catalyseurs sont ceux habituellement utilisés avec les formulations époxy comme par exemple les amines tertiaires, les imidazoles....

Les résines selon l'invention, produites par le mélange d'huile(s) époxydée(s) avec un durcisseur et le(s) réactif(s) ($CR_x$) affichent une réactivité très nettement accrue. De plus, le matériau décliné après réticulation est doté de propriétés thermomécaniques très nettement améliorées.

Lorsqu'on travaille avec des huiles végétales époxydées, il est important de préciser que l'ajout du réactif $CR_x$ à la formulation initiale est opéré en gardant constant le rapport du nombre des groupes époxy sur celui des unités réactives du durcisseur (anhydride, diacide, polyamine...) entre la formulation binaire (huile/durcisseur) et la formulation ternaire (huile/durcisseur +$CR_x$). $CR_x$ est alors considéré comme un co-réactif. Les molécules de co-réactif sont capables de réagir rapidement avec le même durcisseur que celui qui permet la réticulation de l'huile végétale époxydée. Ce dernier étant dosé de manière à pouvoir consommer l'ensemble des fonctions époxy de l'huile et du co-réactif, le réseau macromoléculaire est continu. Du fait de la taille réduite du co-réactif, la maille moyenne de ce réseau est plus petite que celle caractéristique du réseau obtenu par la seule réaction de l'huile végétale époxydée avec le durcisseur. Les propriétés thermomécaniques sont alors meilleures avec le co-réactif (rigidité mécanique et Tg accrue). En fait, le surcroit de réactivité et de performances thermiques et mécaniques dépend de la nature intrinsèque du co-réactif et de son dosage relatif dans la formulation générale.

Les résines époxydes selon l'invention peuvent être utilisées dans des pièces composites pour la construction mécanique ou pour le bâtiment et dans les pièces de structure pour la construction, les transports, l'aérospatiale, le nautisme, les loisirs et les sports, en particulier pour des applications concernant des pièces structurales exposées à la fatigue ou des pièces soumises à des variations thermiques.

Elles peuvent également être utilisées comme adhésifs, de préférence comme adhésifs structuraux ou comme revêtements de surface.

L'invention est illustrée par les figures 1 à 7 et par les exemples 1 à 5 qui suivent.

La figure 1 illustre la réaction de réticulation d'une huile époxydée avec une diamine telle que connue de l'état de la technique antérieure. B1 est un squelette central de nature aliphatique ou aromatique.
La figure 2 décrit le schéma de réaction classique entre une huile époxydée et un anhydride d'acide telle que connue de l'état de la technique antérieure. B2 représente un bloc chimique de nature aliphatique ou aromatique support de la fonction anhydride.
La figure 3 illustre l'étude cinétique viscosimétrique d'une formulation binaire formée par un réactif de formule 1b, la 4,4'-méthylène bis(N,N-diglycidylaniline) désignée par CR1 avec l'anhydride méthyltétrahydrophtalique (MTHPA) conformément à l'exemple 1. Le rapport du nombre de groupements anhydride d'acide sur le nombre de groupements époxy est égal à 1.
La figure 4 illustre l'effet que produit l'ajout de - la 4,4'-méthylène bis(N,N-diglycidylaniline) désignée par CR1 - sur le temps de gel de formulations à base d'huile de lin époxydée (ELO) et d'isophorone diamine (IPDA). Trois cinétiques viscosimétriques enregistrées à 140 °C sont ainsi représentées. La première (Δ) est caractéristique d'un mélange comprenant 1 mole d'huile de lin époxydée pour 1,5 moles d'isophorone diamine (ELO-IPDA). La seconde (•) est caractéristique d'un mélange conforme à l'invention comprenant un mélange d'huile de lin époxydée et de CR1 dans une proportion 80/20 (80% du nombre des groupements époxy sont fournis par l'huile ELO et 20% par CR1) avec de l'isophorone diamine (IPDA), en gardant égal au cas précédent le rapport du nombre de groupement N-H sur le nombre de fonction époxy (c'est à dire égal à 1). La dernière courbe viscosimétrique (◊) est spécifique d'un mélange conforme à l'invention comprenant un mélange d'huile de lin époxydée et de CR1 dans une proportion 50/50 (50% du nombre des groupements époxy sont fournis par l'huile ELO et 50% par CR1) avec de l'isophorone diamine (IPDA), en gardant égal au cas précédent le rapport du nombre de groupement N-H sur le nombre de fonction époxy (c'est à dire égal à 1).
La figure 5 illustre les performances thermomécaniques de mélanges selon l'invention. Le durcisseur est l'isophorone diamine (IPDA). Les courbes représentent l'évolution des composantes viscoélastiques de diverses formulations selon l'invention. La composante G' est appelée «module de conservation» ; elle traduit l'énergie stockée puis restituée par le matériau et illustre sa rigidité mécanique. La composante G" désigne le «module de perte» caractéristique de l'énergie mécanique dissipée du fait des mouvements moléculaires se produisant au sein de la matière. La relaxation principale du polymère, associée à la manifestation rhéologique de la transition vitreuse du réseau macromoléculaire, est détectée par l'inflexion de la courbe G' (=baisse brutale de la rigidité mécanique). Ce phénomène s'accompagne de la formation d'un pic principal sur la courbe de G". Son maximum permet d'estimer la $T\alpha$ du matériau, autrement dit sa température de transition vitreuse au sens rhéologique. Une seule est relevée par mélange démontrant l'existence d'un seul réseau macromoléculaire ; (100:0) représente un mélange de l'état de la technique dans lequel la totalité des groupements époxy est apportée par l'ELO. En d'autres termes, le mélange ne contient pas de CR1; (80:20) représente un mélange selon l'invention dans lequel les groupements époxy sont fournis à 80% du nombre total par l'ELO, les 20% résiduels étant fournis par CR1; (50:50) représente un mélange dans lequel les groupements époxy sont fournis en égale proportion par l'ELO et CR1 ; (20:80) représente un mélange dans lequel les groupements époxy sont fournis à 20% du nombre total par l'ELO, les 80% résiduels étant fournis par CR1 ; (0:100) représente un mélange dans lequel les groupements époxy sont fournis à 100% par CR1.
La figure 6 illustre les performances thermomécaniques de mélanges selon l'invention. Le durcisseur est l'isophorone diamine (IPDA) et le réactif est un réactif de formule 1b, la N,N-diglycidyl-4-glycidyloxyaniline, (appelé également CR2). (100:0) représente un mélange selon l'état de la technique dans lequel la totalité des groupements époxy est apportée par l'ELO. Ce mélange ne contient pas de CR2; (80:20) représente un mélange dans lequel les groupements époxy sont fournis à 80% du nombre total par l'ELO, les 20% résiduels étant fournis par CR2; (0:100) représente un mélange dans lequel les groupements époxy sont fournis à 100% par CR2. En d'autres termes, ce dernier mélange ne contient pas d'huile de lin époxydée.
La figure 7 illustre les performances thermomécaniques de mélanges selon l'invention. Le durcisseur est l'isophorone diamine (IPDA) et le réactif est un autre réactif de formule 1a, le triphénylolméthane triglycidyl éther (désigné par le terme CR3). (100:0) représente un mélange de l'état de la technique dans lequel la totalité des groupements époxy est apportée par l'ELO. Ce mélange ne contient pas de CR3 ; (80:20) représente un mélange dans lequel les groupements époxy sont fournis à 80% du nombre total par l'ELO, les 20% résiduels étant fournis par CR3 ; (0:100) représente un mélange dans lequel les groupements époxy sont fournis à 100% par CR3.
La figure 8 illustre le temps de gel de différentes formulations selon l'invention. Le durcisseur utilisé est l'anhydride méthyl tétrahydrophtalique (MTHPA) ; (100:0) représente un mélange selon l'état de la technique dans lequel la totalité des groupements époxy est apportée par l'ELO ; (80:20) représente un mélange dans lequel les groupements époxy sont fournis à 80% du nombre total par l'ELO, les 20% résiduels étant fournis par CR2 ; (50:50) représente un mélange dans lequel les groupements époxy sont fournis en égale proportion par l'ELO et CR2 ; (0:100) représente un mélange dans lequel les groupements époxy sont fournis à 100% par CR2.

**Exemple 1 : Formulation du mélange de la 4,4'-méthylène bis(N,N-diglycidylaniline) avec l'anhydride méthyl tétrahydrophtalique(MTHPA) et résine obtenue**

1.1. Préparation du mélange

a. Le MTHPA et la 4,4'-méthylènebis(N,N-diglycidylaniline) (ou CR1) sont liquides à température ambiante. Aucun préchauffage des deux matières n'est donc nécessaire avant l'opération de mélange proprement dite.
b. Le MTHPA est alors ajouté à la 4,4'-méthylènebis(N,N-diglycidylaniline) pour former le mélange CR1-MTHPA défini avantageusement par un rapport molaire de 1:4. Dans ce cas précis, le nombre de fonctions époxy sur le nombre de groupements anhydride est alors égal à 1.
c. Un catalyseur, 2-méthyl imidazole, est dissous dans de l'éthanol pour produire une solution concentrée à 33% en masse. Cette solution est alors ajoutée au mélange CR1-MTHPA. La quantité de solution catalytique ajoutée représente 3% de la masse du mélange CR1-MTHPA.
d. Ce mélange est alors brassé durant une minute de manière à garantir son homogénéité.
e. La réticulation est réalisée dès 25 °C.

1.2. Mesure du temps de gel

La réaction de réticulation d'une formulation thermodurcissable consiste à produire un réseau macromoléculaire tridimensionnel à partir de l'association des unités réactives. A l'échelle macroscopique, cette transformation peut être suivie par la technique de la viscosimétrie en régime permanent. L'expérience consiste à enregistrer l'évolution de la viscosité du mélange à température constante (celle choisie pour la réticulation) au moyen d'un rhéomètre rotatif équipé par exemple d'une géométrie « plateaux parallèles ». Le point de gel associé avec la formation critique du réseau macromoléculaire est alors défini par le temps auquel la viscosité du mélange diverge. De manière pratique, ce temps est relevé en prenant le point d'intersection de l'asymptote à la courbe de la viscosité dans la région de divergence avec l'axe temporel.

1.3. Résultats

Ils sont présentés sur la figure 3.
La figure 3 montre que la viscosité de la formulation CR1-MTHPA évolue très nettement avec le temps et diverge même pour une durée proche de 1000 minutes. Cette évolution démontre que la 4,4'-méthylènebis(N,N-diglycidylaniline)- ou CR1 - est capable de réagir directement avec l'anhydride MTHPA. Ainsi, lorsqu'il est ajouté aux mélanges binaires « huile végétale / durcisseur », le CR1 agit comme un co-réactif époxydé. Il ne doit pas être confondu avec un simple catalyseur ou amorceur car il participe à la formation du réseau macromoléculaire, en réagissant lui-même directement avec les unités de durcisseur.

**Exemple 2 : Formulation produite par le mélange d'huile de lin époxydée,de 4,4'-méthylène bis(N,N-diglycidylaniline) (=CR1), et d'isophorone diamine (IPDA) : influence de la teneur en CR1 sur le temps de gel de la formulation réactive et sur la réponse thermomécanique du matériau réticulé.**

2.1. Préparation de la formulation

a. Le mélange binaire ELO-IPDA est préparé en versant à température ambiante la diamine liquide dans l'huile. Dans cet exemple, la stoechiométrie molaire du mélange ELO-IPDA est de 1:1,5 soit un rapport (N-H/époxy) =1.
b. Pour obtenir la formulation ternaire ELO-CR1-IPDA, l'huile ELO et le CR1 sont d'abord mélangés à température ambiante. Le brassage est mené durant 5 minutes. Puis, le durcisseur IPDA est incorporé à son tour à ce mélange. Le brassage est poursuivi durant près de deux minutes alors que la température est maintenue à l'ambiante.
c. La stoechiométrie du mélange ELO-CR1-IPDA est calculée de façon à conférer au milieu un rapport du nombre de groupements époxy par le nombre de groupements amine égal à celui choisi dans le cas du mélange binaire ELO-IPDA.
d. Quatre formulations sont proposées à titre d'exemple mais présentent toutes un rapport (N-H/époxy) égal à 1. Celle repérée avec le code 100:0 correspond à une formulation binaire où 100% des groupements époxy sont apportés par l'huile ELO : il n'y a donc pas de CR1. La composition massique de cette formulation est de 79,2%

d'ELO et 20,8% d'IPDA. Le second mélange est ternaire et est défini par le code 80:20 pour lequel 80% des groupements époxy sont portés par huile et 20% par CR1. La composition massique de cette formulation est de 67,1% de ELO, 10,9% de CR1 et 22,0% d'IPDA. La formulation 50:50 représente quant à elle un mélange ternaire pour lequel 50% des groupements époxy sont portés par l'huile ELO et 50% par CR1. La composition massique de cette formulation est de 46,0% d'ELO, 29,9% de CR1 et 24,1% d'IPDA. La dernière formulation est binaire et est définie par le code 0:100. Elle désigne un mélange dans lequel 100% des groupements époxy sont apportés par CR1: il n'y a donc pas d'huile ELO. La composition massique de cette formulation est de 0% d'ELO, 71,3% de CR1 et 28,7% d'IPDA.

e. Chaque formulation est mise à réticuler à 140 °C durant 24 heures.

2.2. Résultats

L'influence de la composition du mélange sur le temps de gel de la formulation est décrite par la figure 4. La structure chimique de CR1 est rappelée sur la même figure.

On constate que la substitution d'unités lipidiques époxydés par des unités époxydes de CR1 permet une réduction très importante du temps de gel. En effet, ce dernier est de :

- 147 min pour un mélange 100%ELO-0%CR1-IPDA,
- 11 min pour un mélange 80%ELO-20%CR1-IPDA,
- 4 min pour un mélange 50%ELO-50%CR1-IPDA,

L'utilisation de CR1 entraîne donc une réduction très importante du temps de gel de la formulation et permet donc de pallier la faible réactivité des huiles époxydées.

Les effets de la composition du mélange sur le comportement thermomécanique du matériau final après réticulation sont décrits par la figure 5.

L'augmentation de la proportion de CR1 dans la formulation ELO-CR1-IPDA entraîne une augmentation des performances thermomécaniques du matériau après réticulation. Cette évolution est mise en évidence par l'augmentation de la température de transition vitreuse du produit final. Elle est induite par la taille plus réduite des segments moléculaires du CR1quiprovoque une augmentation de la rigidité du réseau polymère. On observe dans le même temps une réduction de la taille et de la masse moyenne Mc de la maille du réseau. Cette évolution est traduite par l'augmentation de la valeur du module G' dans la zone caoutchoutique car G'=f(1/Mc).

**Exemple 3 : Formulation produite par le mélange d'huile de lin époxydée,de N,N-diglycidyl-4-glycidyloxyaniline (=CR2), et d'isophorone diamine : influence de la teneur en CR2 sur les performances thermomécaniques du matériau final.**

3.1. Préparation de la formulation

a. Son mode est semblable à celui décrit dans l'exemple 2 : le mélange binaire ELO-IPDA est préparé en versant à température ambiante la diamine liquide dans l'huile. Dans cet exemple, la stoechiométrie molaire du mélange ELO-IPDA est de 1:1,5 soit un rapport (N-H/époxy) =1.

b. La préparation des formulations ternaires ELO-CR2-IPDA nécessite de mélanger tout d'abord l'huile ELO et le CR2 à température ambiante. Le brassage est mené durant 5 minutes. Puis, le durcisseur IPDA est incorporé à son tour à ce mélange et le brassage est poursuivi durant près de deux minutes à température ambiante.

c. La stoechiométrie du mélange ELO-CR2-IPDA est calculée de façon à conférer au milieu un rapport du nombre de groupements époxy par le nombre de groupements amine égal à celui choisi dans le cas du mélange binaire ELO-IPDA.

d. Trois formulations sont ainsi proposées pour illustrer cet exemple 3. Toutes présentent un rapport (N-H/époxy) égal à 1. Deux sont binaires. La première repérée avec le code 100:0 correspond à une formulation où 100% des groupements époxy sont apportés par l'huile ELO : il n'y a donc pas de CR2. Sa composition massique est de 79,2% d'ELO et 20,8% d'IPDA. Le second mélange binaire, défini par le code 0:100, désigne un mélange dans lequel 100% des groupements époxy sont apportés par CR2. La composition massique de cette formulation est de 0% d'ELO, 68,4% de CR2 et31,6% d'IPDA. La troisième formulation est ternaire et est définie par le code 80:20. Elle correspond à un mélange où 80% des groupements époxy sont portés par huile et 20% par CR2. Sa composition massique est de 68,0% de ELO, 9,7% de CR2 et 22,3% d'IPDA.

e. Chaque formulation est mise à réticuler à 140 °C durant 24 heures.

3.2. Résultats

L'influence de la teneur en CR2 sur les performances thermomécaniques du matériau après réticulation est décrite par la figure 6.

Les tendances dégagées précédemment avec le CR1 sont à nouveau rencontrées avec l'autre co-réactif CR2. En particulier, l'accroissement de la proportion de co-réactif dans la formulation ELO-CR2-IPDA entraîne une augmentation de la température de transition vitreuse du matériau après réticulation. L'augmentation de la valeur du module G'=f(1/Mc) dans la zone caoutchoutique traduit à nouveau une réduction de la taille et de la masse moyenne Mc de la maille du réseau.

**Exemple 4 : Formulation produite par le mélange d'huile de lin époxydée,de triphénylolméthane triglycidyl éther (= coréactif CR3), et d'isophorone diamine : évolution des performances thermomécaniques du matériau final avec la teneur en CR3.**

4.1. Préparation de la formulation

a. Le mélange binaire ELO-IPDA est préparé en versant à température ambiante la diamine liquide dans l'huile. La stoechiométrie molaire du mélange ELO-IPDA est de 1:1,5 soit un rapport (N-H/époxy) =1.

b. La préparation des formulations ternaires ELO-CR3-IPDA requiert le mélange préalable de l'huile ELO et du CR3 à 60 °C. Cette dernière température est nécessaire pour induire la fusion de CR3 solide à température ambiante. Le brassage est mené durant 5 minutes. Puis, le durcisseur IPDA est incorporé à son tour à ce mélange pour produire la formulation ternaire. Le brassage est poursuivi durant une minute à 60 °C.

c. La stoechiométrie du mélange ELO-CR3-IPDA est calculée de façon à conférer au milieu un rapport du nombre de groupements époxy par le nombre de groupements amine égal à celui choisi dans le cas du mélange binaire ELO-IPDA. En d'autres termes, toutes les formulations présentent un rapport (N-H/époxy) égal à 1.

d. Trois formulations sont ainsi proposées pour illustrer cet exemple 4. Deux sont binaires. La première désignée sous le code 100:0 correspond à une formulation où 100% des groupements époxy sont apportés par l'huile ELO Sa composition massique est de 79,2% d'ELO et 20,8% d'IPDA. Le second mélange binaire, défini par le code 0:100, désigne un mélange dans lequel 100% des groupements époxy sont apportés par CR3. La composition massique de cette formulation est de 0% d'ELO, 78,3% de CR3 et 21,7% d'IPDA. La dernière formulation est définie par le code 80:20. Elle correspond à un mélange ternaire où 80% des groupements époxy sont portés par huile et 20% par CR3. Sa composition massique est de 63,9% de ELO, 15,1% de CR3 et 21% d'IPDA.

e. Chaque formulation est mise à réticuler à 140 °C durant 24 heures.

4.2. Résultats

Les effets produits par l'augmentation de la teneur en CR3 sur les performances thermomécaniques du matériau après réticulation sont illustrés par la figure 7.

Comme dans les deux cas précédents, l'accroissement de la proportion de CR3 dans la formulation ELO-CR3-IPDA entraîne une augmentation de la température de transition vitreuse du matériau après réticulation. Mais dans le cas présent, l'évolution est encore plus franche. Le module de plateau caoutchoutique augmente lui aussi révélant une réduction de la taille et de la masse moyenne Mc de la maille du réseau polymère.

**Exemple 5 : Formulation produite par le mélange d'huile de lin époxydée (ELO),de N,N-diglycidyl-4-glycidyloxyaniline (=CR2)et de l'anhydride méthyl tétrahydrophtalique(MTHPA) en présence de 2-méthyl imidazole (2MI) comme catalyseur: influence sur le temps de gel de la formulation réactive et évolution des performances thermomécaniques du matériau finalavec la teneur en CR2.**

5.1. Préparation de la formulation ternaire ELO-MTHPA-2MI

a. Le mélange ternaire ELO-MTHPA-2MI est préparé en versant à température ambiante l'anhydride dans l'huile. La stoechiométrie molaire du mélange ELO-MTHPA est de 1:6 soit un rapport (époxy/anhydride)=6.

b. Puis, le catalyseur 2-méthyl imidazole (2MI) en solution éthanolique (concentration massique = 33%) est ajouté au mélange précédent. La quantité de solution éthanolique ajoutée représente quelques pourcents de la masse du

mélange ELO-MTHPA (avantageusement proche de 3%).
c. L'ensemble est brassé à température ambiante durant 2 minutes.
d. Les proportions massiques de ELO, MTHPA et 2MI sont respectivement de l'ordre de 53,4%, 43,7% et 2,9%. Elle est désignée sous le code 100:0 pour illustrer l'absence de CR2.
e. La réticulation de la formulation est menée à 140 °C durant 24 heures.

5.2. Préparation de la formulation ternaire CR2-MTHPA-2MI

a. Le mélange ternaire CR2-MTHPA-2MI est préparé en versant à température ambiante l'anhydride dans CR2. La stoechiométrie molaire du mélange CR2-MTHPA est de 1:3 soit un rapport (époxy/anhydride)=3.
b. Puis, le catalyseur 2-méthyl imidazole (2MI) en solution éthanolique (concentration massique = 33%) est ajouté au mélange précédent. La quantité de solution éthanolique ajoutée représente quelques pourcents de la masse du mélange CR2-MTHPA (avantageusement proche de 3%).
c. L'ensemble est brassé à température ambiante durant 2 minutes.
d. Les proportions massiques de CR2, MTHPA et 2MI sont respectivement de l'ordre de 39,4%, 56,8% et 3,8%. Elle est désignée sous le code 0:100 pour illustrer l'absence d'huile époxydée.
e. La réticulation de la formulation est menée à 140 °C durant 24 heures.

5.3. Préparation de la formulation quaternaire ELO-CR2-MTHPA-2MI

a. CR2 est versé dans l'huile à température ambiante.
b. Le mélange est brassé durant 2 minutes à température ambiante.
c. L'anhydride liquide et le catalyseur en solution éthanolique (33% m/m) sont alors ajoutés au mélange précédent. L'anhydride est dosé de manière à assurer un ratio « groupements anhydride d'acide/groupements époxy » égal à 1. La quantité de solution catalytique représente avantageusement 3% de la masse du mélange ELO-CR2-MTHPA.
d. Ce mélange ELO-CR2-MTHPA-2MI est alors brassé durant 3 minutes à l'ambiante.
e. Deux formulations ont été préparées dans cette catégorie pour illustrer l'exemple 6. Celle désignée sous le code 80:20 correspond à un mélange quaternaire où 80% des groupements époxy sont portés par huile et 20% par CR2. Sa composition massique est de 44,8% de ELO, 6,4% de CR2, 45,8% de MTHPA et 3,1% de 2MI. Celle repérée sous le code 50:50 correspond à un mélange quaternaire où 50% des groupements époxy sont portés par huile et 50% par CR2.Sa composition massique est de 30,2% de ELO, 17,2% de CR2, 49,4% de MTHPA et 3,3% de 2MI.
f. La réticulation de chacune de ces formulations a été menée à 140 °C durant 24 heures.

5.4. Résultats

Ils sont présentés sur la figure 8. La structure chimique de CR2 est rappelée sur la même figure.
Cette dernière démontre l'intérêt d'ajouter CR2 à la formulation basée initialement sur le mélange d'huile de lin époxydée ELO, de MTHPA et de catalyseur 2-méthyl-imidazole. En effet, à 80°C, le temps de gel de la formulation ELO-MTHPA-2MI (100:0) avoisine 180 minutes. Mais, l'ajout de CR2 permet de réduire de manière significative ce temps critique.

- Ainsi, pour la formulation au sein de laquelle 80% des groupements époxy sont portés par l'huile ELO et 20% par CR2, le temps de gel est de 60 minutes.
- Dans la formulation 50:50 où les groupements époxy sont équitablement répartis entre l'huile ELO et CR2, le temps de gel diminue encore puisqu'il n'est plus que de 30 minutes.
- Enfin, l'analyse viscosimétrique de la formulation CR2-MTHPA (0-100) démontre que N,N-diglycidyl-4-glycidyloxyaniline - ou CR2 - est capable de réagir seul avec l'anhydride MTHPA. Le temps de gel de la formulation à 80 °C est alors de 20 minutes.

Ces données montrent que le CR2 n'est pas un simple catalyseur : il participe directement à la formation du réseau macromoléculaire, en réagissant lui-même avec les unités de durcisseur de type anhydride.
L'ensemble de ces résultats montrent que les réactifs de formule (Ia) et (Ib) ne sont pas de simples catalyseurs mais participent directement à la formation du réseau macromoléculaire, en réagissant eux-mêmes avec les unités de durcisseur utilisé.

**Revendications**

1. Résines époxydes comprenant le produit de réaction d'un mélange comprenant :

- au moins

o un réactif non biosourcé non polymère et porteur d'au moins 3 fonctions époxy terminales ($CR_x$),
o au moins un dérivé lipidique époxydé biosourcé et

- au moins un agent de réticulation,

le rapport entre le nombre de fonctions réactives de l'agent de réticulation et le nombre de fonctions époxy étant maintenu constant indépendamment de la constitution du mélange, à condition que :

- $CR_x$ ne soit pas un composé ayant la formule (a) suivante :

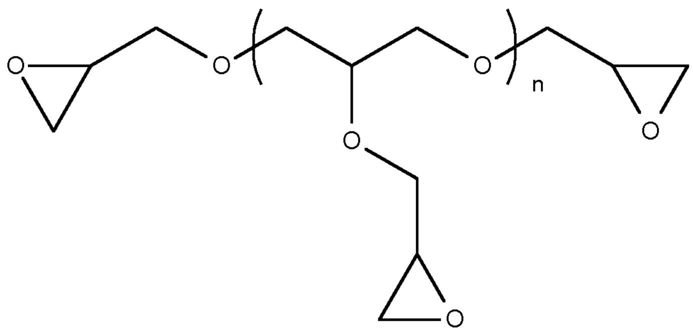

(a)

dans laquelle n est un nombre entier compris entre 1 et 20.

2. Résines époxydes selon la revendication 1 **caractérisées en ce que** le au moins un co-réactif répond

a. à la formule (Ia),

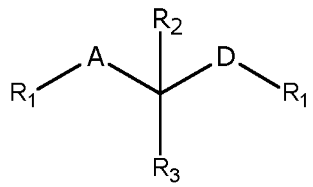

(Ia)

dans laquelle

- A et D représentent chacun indépendamment l'un de l'autre

o un radical-($C_nH_{2n}$)- où n est compris entre 1 et 5, notamment un radical $-CH_2-$ ou
o un radical arylène, notamment un radical phénylène [($-C_6H_4$)-], ou
o un groupe $-(CH_2)_l-O-(CH_2)_m-[CH(CH_3)]_p-OR$ où l et m, identiques ou différents, sont des entiers compris entre 1 et 5, pouvant donc être égaux, indépendamment l'un de l'autre, à 0, 1, 2, 3, 4 ou 5, p est un entier compris entre 0 et 1, R est un groupe

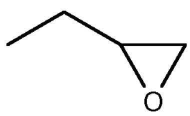

- $R_1$ représente un groupe -OR, où R est tel que défini précédemment
- $R_2$ et $R_3$ représentent chacun indépendamment l'un de l'autre,

o soit un atome d'hydrogène,
o soit un groupe $(C_1-C_5)$alkyle linéaire ou ramifié,
o soit un groupe -OR, où R est tel que défini précédemment,
o soit un groupe $-CH_2OR$, où R est tel que défini précédemment,
o soit un groupe $-C_6H_4OR$, où R est tel que défini précédemment,
o soit un groupe $-O-(CH_2)_r-[CH(CH_3)]_s-OR$, où r est un entier compris entre 1 et 5, avantageusement égal à 1, 2, 3, 4 ou 5 et s est un entier compris entre 0 et 1 et R est tel que défini précédemment,

à condition que le composé de formule

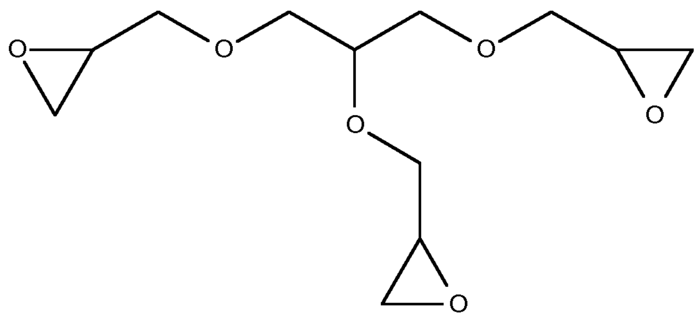

soit exclu,
ou
b. à la formule (Ib)

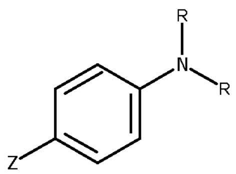

(Ib)

dans laquelle

- Z représente

◦ soit un groupe OR où R est tel que défini précédemment,
◦ soit un groupe

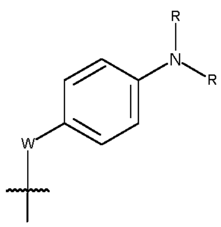

où W est choisi dans le groupe comprenant les atomes d'oxygène et de soufre et les radicaux $-(C_nH_{2n})-$ linéaire ou ramifié où n est compris entre 1 et 5 et $-SO_2-$ et R est tel que défini précédemment

**3.** Résines époxydes selon la revendication 2 **caractérisées en ce que** le au moins $CR_x$ répond à la formule (Ia) dans laquelle :

- A et D représentent chacun un groupe $-CH_2-$,
- $R_2$ représente soit un atome d'hydrogène, soit un groupe $-CH_2OR$, soit un groupe $-C_6H_4OR$ où R est tel que défini précédemment, $R_3$ représente un groupe méthyle, éthyle, $-CH_2OR$ ou $-O-CH_2-CH(CH_3)-OR$ où R est tel que défini précédemment.

**4.** Résines époxydes selon la revendication 2 **caractérisées en ce que** le au moins un $CR_x$ répond à la formule (Ia) dans laquelle :

- A et D représentent chacun un groupe $-(C_6H_4)-$,
- $R_2$ représente un atome d'hydrogène ou un groupe méthyle et
- $R_3$ représente un groupe $-C_6H_4OR$ où R est tel que défini précédemment.

**5.** Résines époxydes selon l'une quelconque des revendications précédentes, **caractérisées en ce que** le un ou plusieurs dérivés lipidiques époxydés biosourcés sont extraits d'une huile végétale naturelle, notamment l'huile de vernolia, dans laquelle ils sont présents sous forme époxydée.

**6.** Résines époxydes selon l'une quelconque des revendications 1 à 4, **caractérisées en ce que** le ou les dérivés lipidiques époxydés sont obtenus par époxydation de lipides extraits d'huiles végétales naturelles choisies dans le groupe comprenant l'huile de lin, de chanvre, de tournesol, de colza, de soja, d'olive, de pépins de raisin, de bois de Tung, de coton, de maïs, de noisette, de noix de coco, de palme, de ricin, de noix de cajou et d'arachide et le mélange de celles-ci ou extraits d'huiles animales.

**7.** Résines époxydes selon l'une quelconque des revendications précédentes **caractérisées en ce que** le au moins un agent de réticulation est choisi :

a. dans le groupe comprenant des composés porteurs de fonctions amines, lesdits composés lorsqu'ils sont porteurs de fonctions amines primaires étant choisis dans le groupe comprenant les diamines, les polyamines et leurs mélanges ou
b. dans le groupe des anhydrides d'acides ou
c. dans le groupe des diacides et des polyacides ou
d. dans le groupe des alcools y compris les phénols ou
e. dans le groupe des polymercaptans et
f. dans le groupe comprenant les mélanges d'au moins deux agents choisis dans ceux mentionnés en a) à e).

**8.** Résines époxydes selon la revendication 7 **caractérisées en ce que**, lorsque le au moins un agent de réticulation est un composé porteur de groupements N-H, appartenant à des fonctions amines primaires ou secondaires,le rapport du nombre de groupements N-H sur le nombre de groupements époxy est égal à l'unité.

**9.** Résines époxydes selon la revendication 7 **caractérisées en ce que**, lorsque le au moins un agent de réticulation est un anhydride d'acide, le rapport du nombre de groupements anhydride d'acide sur le nombre de groupements époxy est égal à l'unité.

**10.** Procédé de formulation de résines époxydes comprenant le mélange :

- d'au moins un réactif non biosourcé non polymère et porteurs d'au moins 3 fonctions époxy terminales ($CR_x$),
- d'au moins un dérivé lipidique époxydé biosourcé et
- d'au moins un agent de réticulation,

le rapport entre le nombre de fonctions réactives de l'agent de réticulation et le nombre de fonctions époxy étant maintenu constant indépendamment de la constitution du mélange, à condition que :

- ledit réactif non biosourcé, non polymère ne soit pas un composé ayant la formule (a) suivante :

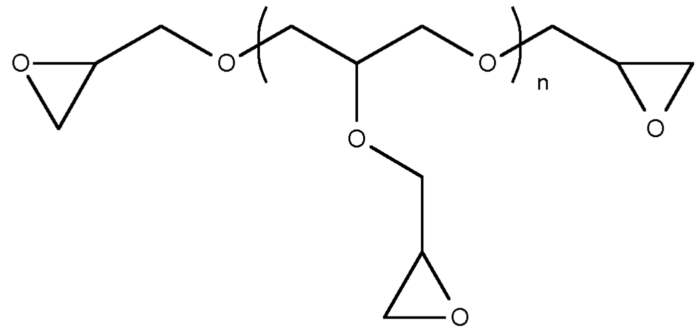

(a)

dans laquelle n est un nombre entier compris entre 1 et 20.

**11.** Procédé de préparation de résines époxydes selon la revendication 10 **caractérisé en ce qu'**il comprend les étapes suivantes :

a. mélanger un ou plusieurs dérivés lipidiques époxydés biosourcés,
b. ajouter le co-réactif puis opérer à un brassage pour obtenir un mélange époxy homogène,
c. ajouter l'agent de réticulation au dit mélange puis opérer à un nouveau brassage, laisser alors réagir la résine.

**12.** Utilisation de résines époxydes selon l'une quelconque des revendications 1 à 9 dans des pièces composites pour la construction mécanique ou pour le bâtiment et dans les pièces de structure pour la construction, les transports, l'aérospatiale, le nautisme, les loisirs et les sports.

**13.** Utilisation de résines époxydes selon la revendication 12, **caractérisée en ce qu'**il s'agit d'applications concernant des pièces structurales exposées à la fatigue ou des pièces soumises à des variations thermiques.

**14.** Utilisation de résines époxydes selon l'une quelconque des revendications 1 à 9 comme adhésifs, de préférence comme adhésifs structuraux ou comme revêtements de surface.

**Patentansprüche**

**1.** Epoxidharze, das Reaktionsprodukt eines Gemischs umfassend, welches umfasst:

- mindestens

  o ein Nicht-Polymer-Reagens nicht biologischen Ursprungs, mindestens drei endständige Epoxidfunktionen ($CR_x$) tragend,
  o mindestens ein epoxidiertes Lipidderivat biologischen Ursprungs und

- mindestens ein Vernetzungsmittel,

wobei das Verhältnis der Anzahl der reaktiven Funktionen des Vernetzungsmittels zur Anzahl der Epoxyfunktionen unabhängig von der Zusammensetzung des Gemischs gleichbleibend gehalten wird, vorausgesetzt:

- $CR_x$ ist keine Verbindung mit folgender Formel (a)

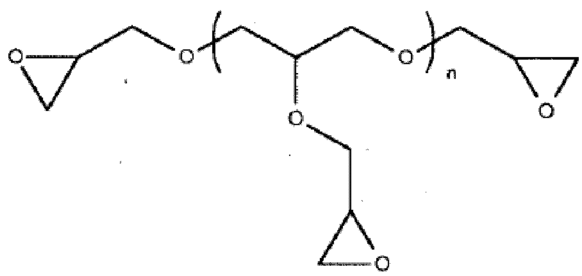

(a)

in welcher n eine ganze Zahl zwischen 1 und 20 ist.

**2.** Epoxidharze nach Anspruch 1, **dadurch gekennzeichnet, dass** das mindestens eine mitwirkende Reagens

a. die Formel (Ia) erfüllt,

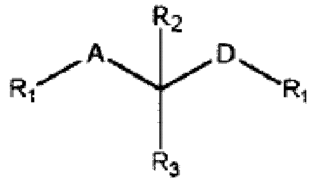

(Ia)

in welcher

- A und D, jedes unabhängig von einander

  ◦ für ein Radikal -($C_nH_{2n}$)- stehen, wo n zwischen 1 und 5 liegt, insbesondere ein Radikal -$CH_2$-, oder
  ◦ für ein Arylradikal, insbesondere ein Phenylradikal [(-$C_6H_4$)-], oder
  ◦ eine -$(CH_2)_1$-O-$(CH_2)_m$-$[CH(CH_3)]_p$-OR Gruppe, wo 1 und m, gleich oder anders, ganze Zahlen zwischen 1 und 5 sind, dementsprechend unabhängig von einander gleich 0, 1, 2, 3, 4 oder 5 sein können, wo p eine ganze Zahl zwischen 0 und 1 und R eine Gruppe ist,

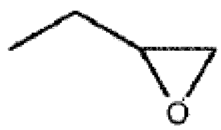

- $R_1$ für eine -OR Gruppe steht, wo R wie vorher definiert ist,
- $R_2$ und $R_3$, jedes unabhängig von einander

  ◦ entweder für ein Wasserstoffatom,
  ◦ oder für eine lineare oder verzweigte Alkylgruppe ($C_1$-$C_s$),
  ◦ oder für eine -OR Gruppe, wo R wie vorher definiert ist,
  ◦ oder für eine -$CH_2$OR Gruppe, wo R wie vorher definiert ist,
  ◦ oder für eine -$C_6H_4$OR Gruppe, wo R wie vorher definiert ist,
  ◦ oder für eine -O-$(CH_2)_r$-$[CH(CH_3)]_s$-OR Gruppe, wo r eine ganze Zahl zwischen 1 und 5, vorteilhafterweise gleich 1, 2, 3, 4 oder 5 ist und s eine ganze Zahl zwischen 0 und 1 und R wie vorher definiert ist, stehen,

vorausgesetzt, die Verbindung mit der Formel

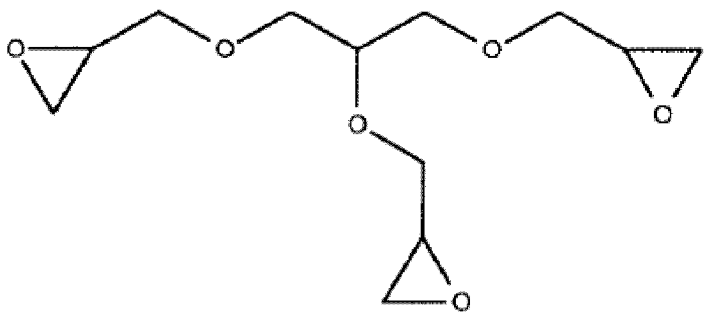

ist ausgeschlossen, oder
b. die Formel (Ib) erfüllt,

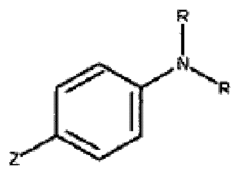

(Ib)

in welcher

- Z
  - entweder für eine OR Gruppe , wo R wie vorher definiert ist,
  - oder für eine Gruppe

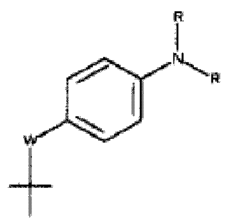

steht, wo W aus der Gruppe bestehend aus den Sauerstoff- und Schwefelatomen und den linearen bzw. verzweigten Radikalen $-(C_nH_{2n})-$ ausgewählt wird, wo n zwischen 1 und 5 liegt und $-SO_2-$ und R wie vorher definiert ist.

3. Epoxidharze nach Anspruch 2, **dadurch gekennzeichnet, dass** das mindestens eine $CR_x$ die Formel (Ia) erfüllt, in welcher:

   - A und D jeweils für eine $-CH_2-$ Gruppe stehen,
   - $R_2$ entweder für ein Wasserstoffatom oder eine $-CH_2OR$ Gruppe oder eine - $C_6H_4OR$ Gruppe steht, wo R wie vorher definiert ist, $R_3$ für eine Methyl-, Ethyl-$-CH_2OR$ oder $-O-CH_2-CH(CH_3)-OR$ Gruppe steht, wo R wie vorher definiert ist.

4. Epoxidharze nach Anspruch 2, **dadurch gekennzeichnet, dass** das mindestens eine $CR_x$ die Formel (Ia) erfüllt, in welcher:

   - A und D jeweils für eine $-(C_6H_4)-$ Gruppe stehen,
   - $R_2$ für ein Wasserstoffatom oder eine Methylgruppe steht und
   - $R_3$ für eine $-C_6H_4OR$ Gruppe steht, wo R wie vorher definiert ist.

5. Epoxidharze nach einem der vorhergehenden Ansprüche, **dadurch gekennzeichnet, dass** das eine oder die mehreren epoxidierten Lipidderivate biologischen Ursprungs aus einem natürlichen Pflanzenöl, insbesondere dem Vernoniaöl extrahiert sind, in welchem sie in epoxidierter Form vorkommen.

6. Epoxidharze nach einem der vorhergehenden Ansprüche 1-4, **dadurch gekennzeichnet, dass** das oder die epoxidierten Lipidderivate durch Epoxidieren von Lipiden gewonnen werden, welche aus natürlichen Pflanzenölen extrahiert sind, die aus der Gruppe bestehend aus Flachs-, Hanf-, Sonnenblumen-, Raps-, Soja-, Oliven-, Traubenkern-, Tung-, Baumwollsaat-, Mais-, Haselnuss-, Kokosnuss-, Palm-, Rizinus-, Anakardiumgummi- und Erdnussöl sowie dem Gemisch derselben ausgewählt sind, oder aus tierischen Ölen extrahiert sind.

7. Epoxidharze nach einem der vorhergehenden Ansprüche, **dadurch gekennzeichnet, dass** das mindestens eine Vernetzungsmittel ausgewählt wird:

   a. aus der Gruppe bestehend aus Aminofunktionen tragenden Verbindungen, wobei diese Verbindungen, wenn sie primäre Aminofunktionen tragen, aus der Gruppe bestehend aus den Diaminen, den Polyaminen und ihren Gemischen ausgewählt sind, oder
   b. aus der Gruppe der Säureanhydriden oder

c. aus der Gruppe der Disäuren und der Polysäuren oder
d. aus der Gruppe der Alkohole einschließlich der Phenole oder
e. aus der Gruppe der Polymercaptanen und
f. aus der Gruppe bestehend aus den Gemischen mindestens zweier Mitteln, die aus den in a) bis e) genannten Mitteln ausgewählt werden.

**8.** Epoxidharze nach Anspruch 7, **dadurch gekennzeichnet, dass**, wenn das mindestens eine Vernetzungsmittel eine N-H Gruppierungen tragende Verbindung ist, welche zu primären oder sekundären Aminofunktionen gehören, das Verhältnis der Anzahl der N-H Gruppierungen zur Anzahl der Epoxy-Gruppierungen gleich der Einheit ist.

**9.** Epoxidharze nach Anspruch 7, **dadurch gekennzeichnet, dass**, wenn das mindestens eine Vernetzungsmittel ein Säureanhydrid ist, das Verhältnis der Anzahl der Säureanhydrid-Gruppierungen zur Anzahl der Epoxy-Gruppierungen gleich der Einheit ist.

**10.** Verfahren zur Formulierung von Epoxidharzen, das Gemisch umfassend:

- mindestens eines Nicht-Polymer-Reagens nicht biologischen Ursprungs, das mindestens drei endständige Epoxidfunktionen ($CR_x$) trägt,
- mindestens eines epoxidierten Lipidderivats biologischen Ursprungs und
- mindestens eines Vernetzungsmittels,

wobei das Verhältnis der Anzahl der reaktiven Funktionen des Vernetzungsmittels zur Anzahl der Epoxyfunktionen unabhängig von der Zusammensetzung des Gemischs gleichbleibend gehalten wird, vorausgesetzt:

- das Nicht-Polymer-Reagens nicht biologischen Ursprungs ist keine Verbindung mit folgender Formel (a):

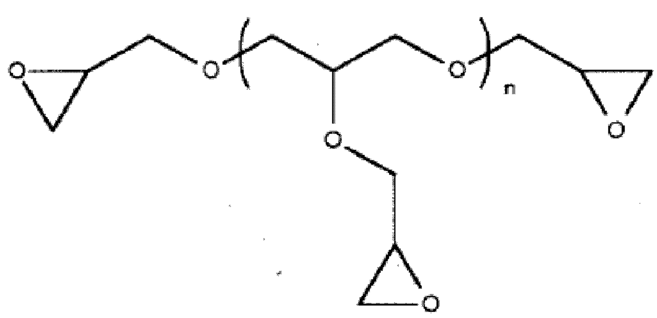

(a)

in welcher n eine ganze Zahl zwischen 1 und 20 ist.

**11.** Verfahren zur Erzeugung von Epoxidharzen nach Anspruch 10, **dadurch gekennzeichnet, dass** es folgende Arbeitsschritte umfasst:

a. eins oder mehrere epoxidierte Lipidderivate biologischen Ursprungs miteinander mischen,
b. das mitwirkende Reagens hinzufügen dann eine Vermischung durchführen, um ein homogenes Epoxygemisch zu erzeugen.
c. das Vernetzungsmittel zu dem Gemisch hinzufügen, dann erneut eine Vermischung durchführen, anschließend das Harz wirken lassen.

**12.** Verwendung von Epoxidharzen nach einem der vorhergehenden Ansprüche 1-9 in Mischteilen für den Maschinenbau oder für das Bauwesen und in Strukturteilen für die Bau-, die Transportindustrie, die Luft- und Raumfahrt, für den Wassersport, für Freizeit und Sport.

**13.** Verwendung von Epoxidharzen nach Anspruch 12, **dadurch gekennzeichnet, dass** es sich dabei um Anwendungen handelt, die Ermüdungserscheinungen ausgesetzten Strukturteile oder Teile unter thermischen Schwankungen betreffen.

**14.** Verwendung von Epoxidharzen nach einem der Ansprüche 1-9 als Klebstoffe, vorzugsweise als Strukturklebstoffe oder als Oberflächenbeschichtung.

## Claims

1. Epoxide resins comprising the product of the reaction of a mixture comprising:

- at least

◦ one non-biosourced non-polymer reagent bearing at least 3 epoxy end functions ($CR_x$),
o at least one biosourced epoxidized lipid derivative and

- at least one cross-linking agent,

the ratio between the number of reactive functions of the cross-linking agent and the number of epoxy functions being kept constant independently of the constitution of the mixture, on the condition that:

- $CR_x$ is not a compound having the following formula (a):

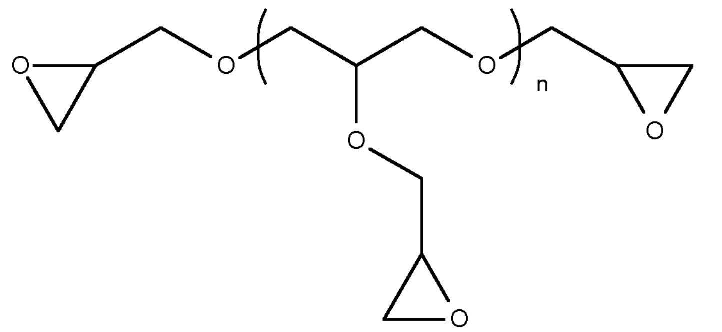

(a)

in which n is an integer comprised between 1 and 20.

2. Epoxide resins according to claim 1 **characterized in that** the at least one co-reactant corresponds

a. to the formula (Ia),

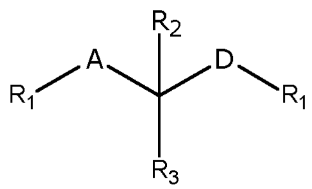

(Ia)

in which

- A and D each represent independently of one another:

◦ a $-(C_nH_{2n})-$ radical where n is comprised between 1 and 5, in particular a $-CH_2-$ radical or
o an arylene radical, in particular a phenylene radical ($-C_6H_4-$), or o
a $-(CH_2)_l-O-(CH_2)_m-[CH(CH_3)]_p-OR$ group where l and m, identical or different, are integers comprised between 1 and 5, therefore being able to equal, independently of one another, to 0, 1, 2, 3, 4 or 5, p is an integer comprised between 0 and 1, and R is the following group

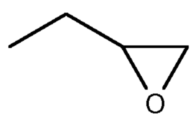

- $R_1$ represents an -OR group, where R is as defined previously
- $R_2$ and $R_3$ each represent independently of one another,

o either a hydrogen atom,
◦ or a linear or branched ($C_1$-$C_5$)alkyl group,
◦ or an -OR group, where R is as defined previously,
◦ or a $-CH_2OR$ group, where R is as defined previously,
◦ or a $-C_6H_4OR$ group, where R is as defined previously,
◦ or an-$O-(CH_2)_r-[CH(CH_3)]_s-OR$ group, where r is an integer comprised between 1 and 5, advantageously equal to 1, 2, 3, 4 or 5 and s is an integer comprised between 0 and 1 and R is as defined previously,

on the condition that the compound of formula

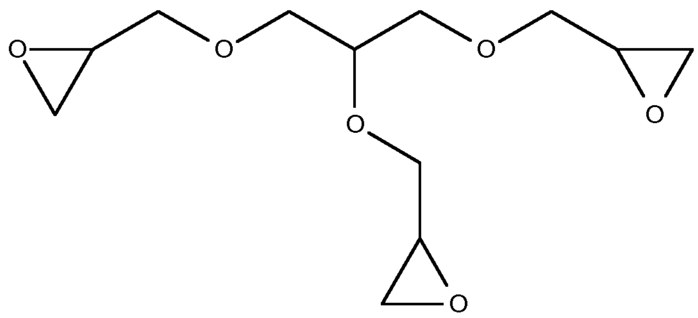

is excluded, or
b. to the formula (Ib)

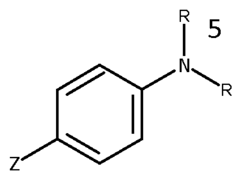

(Ib)

in which

- Z represents

◦ either an OR group where R is as defined previously,
◦ or the following group

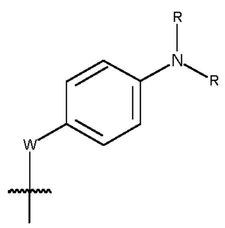

where W is selected from the group comprising the oxygen and sulphur atoms and the linear or branched $-(C_nH_{2n})-$ radicals where n is comprised between 1 and 5, therefore being able to be equal to 1, 2, 3, 4 or 5 and $-SO_2-$ and R is as defined previously

**3.** Epoxide resins according to claim 2 **characterized in that** the at least one $CR_x$ corresponds to formula (Ia) in which:

- A and D each represent a $-CH_2-$ group,
- $R_2$ represents either a hydrogen atom, or a $-CH_2OR$ group, or a - $C_6H_4OR$ group where R is as defined previously, $R_3$ represents a methyl, ethyl, $-CH_2OR$ or $-O-CH_2-CH(CH_3)-OR$ group where R is as defined previously.

**4.** Epoxide resins according to claim 2 **characterized in that** the at least one $CR_x$ corresponds to formula (Ia) in which:

- A and D each represent a $-(C_6H_4)-$ group,
- $R_2$ represents a hydrogen atom or a methyl group and
- $R_3$ represents a $-C_6H_4OR$ group where R is as defined previously.

**5.** Epoxide resins according to any one of the preceding claims, **characterized in that** the one or more biosourced epoxidized lipid derivatives are extracts of a natural vegetable oil, in particular vernolia oil, in which they are present in the epoxidized form.

**6.** Epoxide resins according to any one of claims 1 to 4, **characterized in that** the epoxidized lipid derivative(s) are obtained by epoxidation of lipids extracted from natural vegetable oils selected from the group comprising linseed oil, hemp oil, sunflower oil, colza oil, soya oil, olive oil, grapeseed oil, tung wood oil, cotton oil, maize oil, hazelnut oil, coconut oil, palm oil, castor oil, cashew nut oil and peanut oil and a mixture of the latter or animal oil extracts.

**7.** Epoxide resins according to any one of the preceding claims **characterized in that** the at least one cross-linking agent is selected:

a. from the group comprising compounds bearing amine functions, said compounds when they are bearing primary amine functions being selected from the group comprising the diamines, polyamines and mixtures thereof or
b. from the group of the acid anhydrides or
c. from the group of the diacids and the polyacids or
d. from the group of the alcohols including the phenols or
e. from the group of the polymercaptans or
f. from the group comprising the mixtures of at least two agents chosen from those mentioned in a) to e).

**8.** Epoxide resins according to claim 7 **characterized in that**, when the at least one cross-linking agent is a compound bearing N-H groups, belonging to the primary or secondary amine functions, the ratio of the number of N-H groups to the number of epoxy groups is equal to unity.

**9.** Epoxide resins according to claim 7 **characterized in that**, when the at least one cross-linking agent is an acid anhydride, the ratio of the number of acid anhydride groups to the number of epoxy groups is equal to unity.

**10.** Process for the formulation of epoxide resins comprising the mixture of:

- at least one non-biosourced non-polymer reagent bearing at least 3 epoxy end functions ($CR_x$),
- at least one biosourced epoxidized lipid derivative, and
- at least one cross-linking agent,

the ratio between the number of reactive functions of the cross-linking agent and the number of epoxy functions being kept constant independently of the constitution of the mixture, on the condition that:

- said non-biosourced, non-polymer reagent is not a compound having the following formula (a):

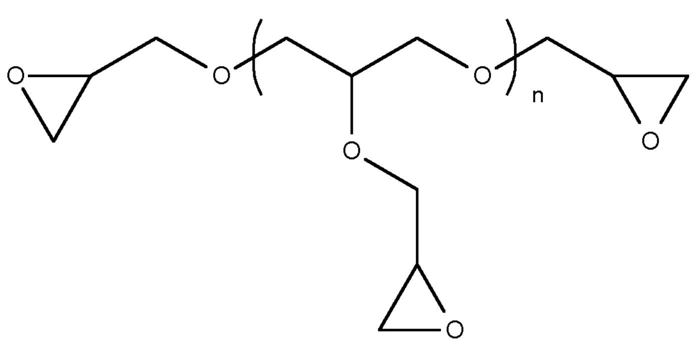

(a)

in which n is an integer comprised between 1 and 20.

**11.** Process for the preparation of epoxide resins according to claim 10 **characterized in that** it comprises the following steps:

a. mixing one or more biosourced epoxidized lipid derivatives,
b. adding the co-reactant then carrying out a mixing operation to obtain a homogeneous epoxy mixture,
c. adding the cross-linking agent to said mixture then carrying out a further mixing operation, then leaving the resin to react,

**12.** Use of epoxide resins according to any one of claims 1 to 9 in composite parts for mechanical construction or for building and in structural parts for construction, transport, aerospace, water sports, sports and leisure.

**13.** Use of epoxide resins according to claim 12, **characterized in that** the applications in question involve structural parts exposed to fatigue or parts subjected to thermal variations.

**14.** Use of epoxide resins according to any one of claims 1 to 9 as adhesives, preferably as structural adhesives or as surface coatings.

# FIGURE 1

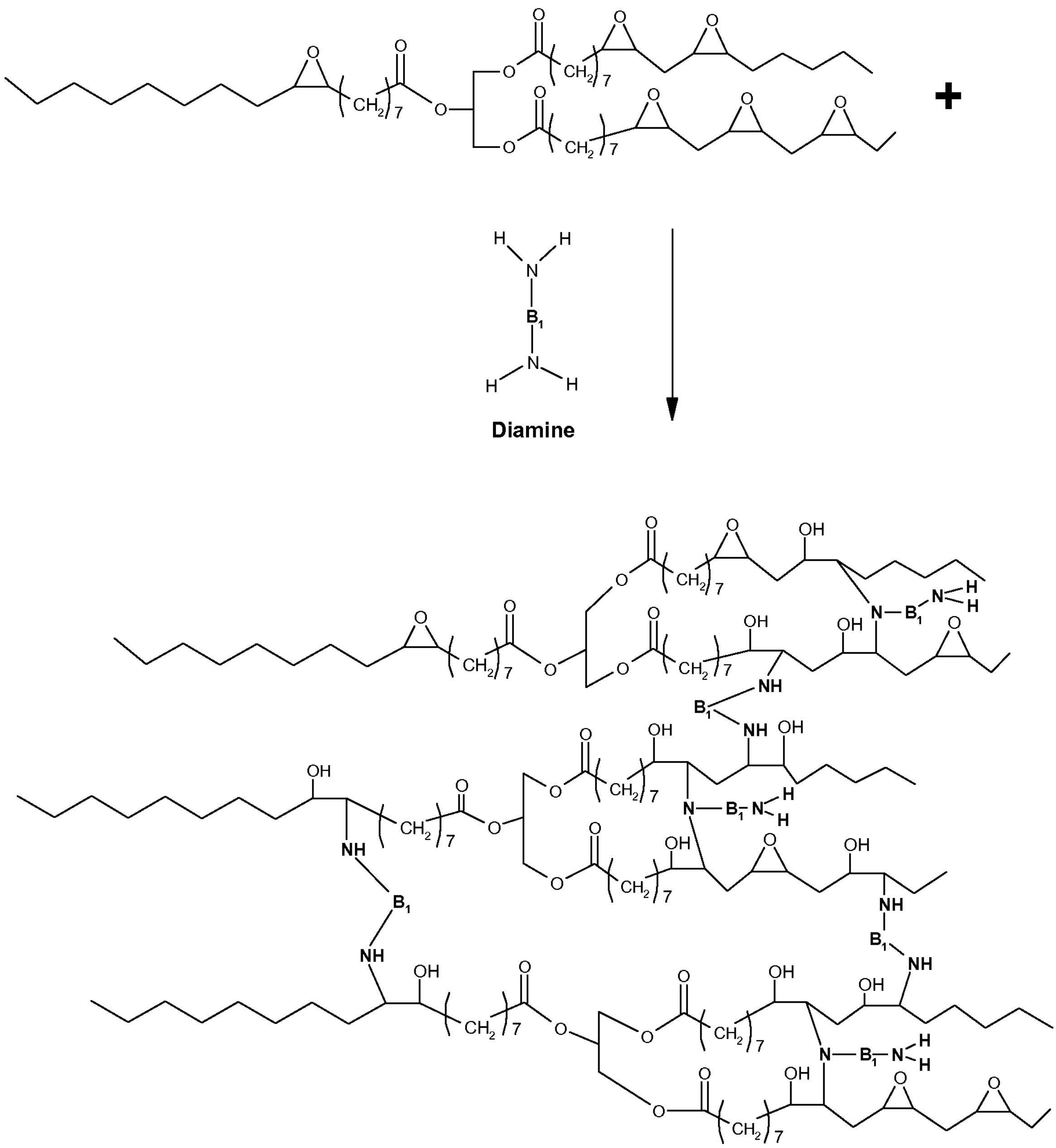

# FIGURE 2

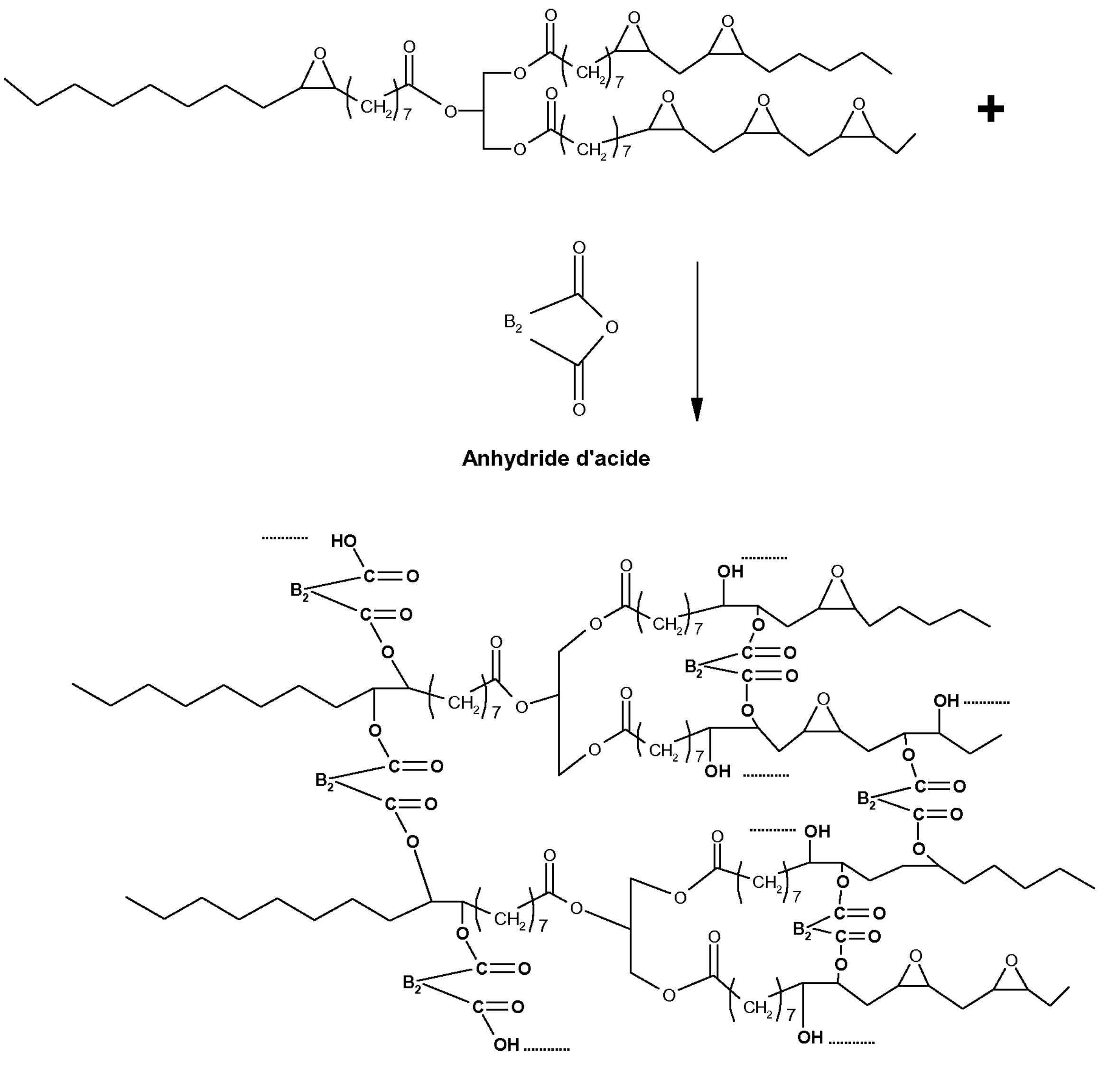

FIGURE 3

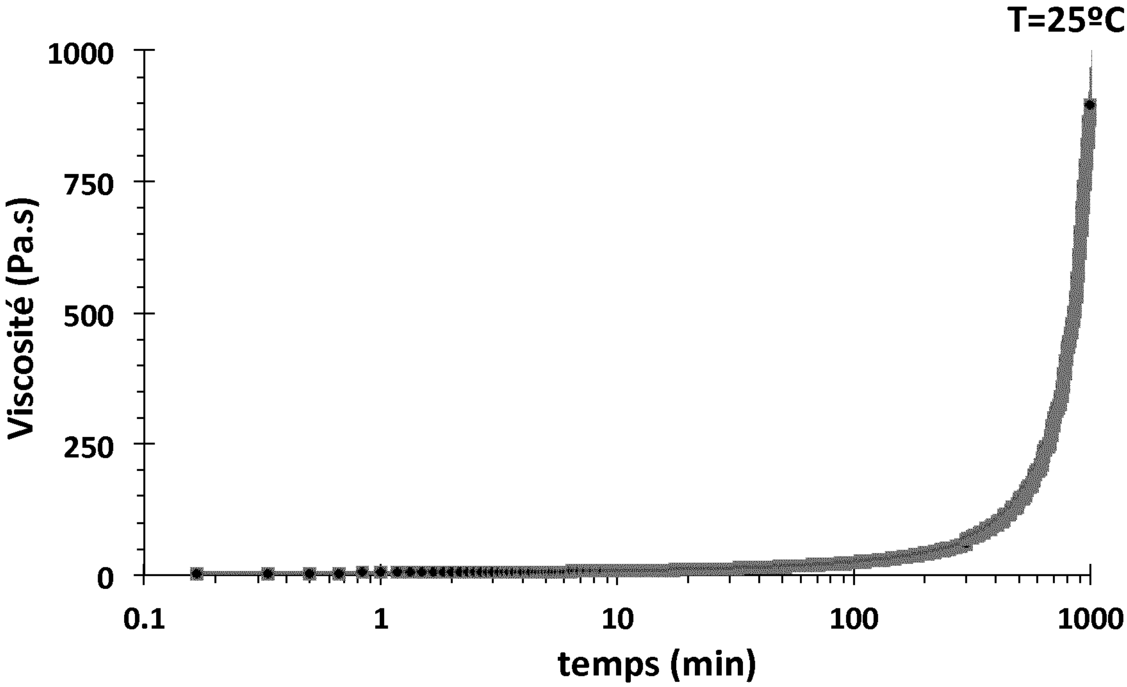
T=25ºC
Viscosité (Pa.s)
1000
750
500
250
0
0.1
1
10
100
1000
temps (min)

FIGURE 4

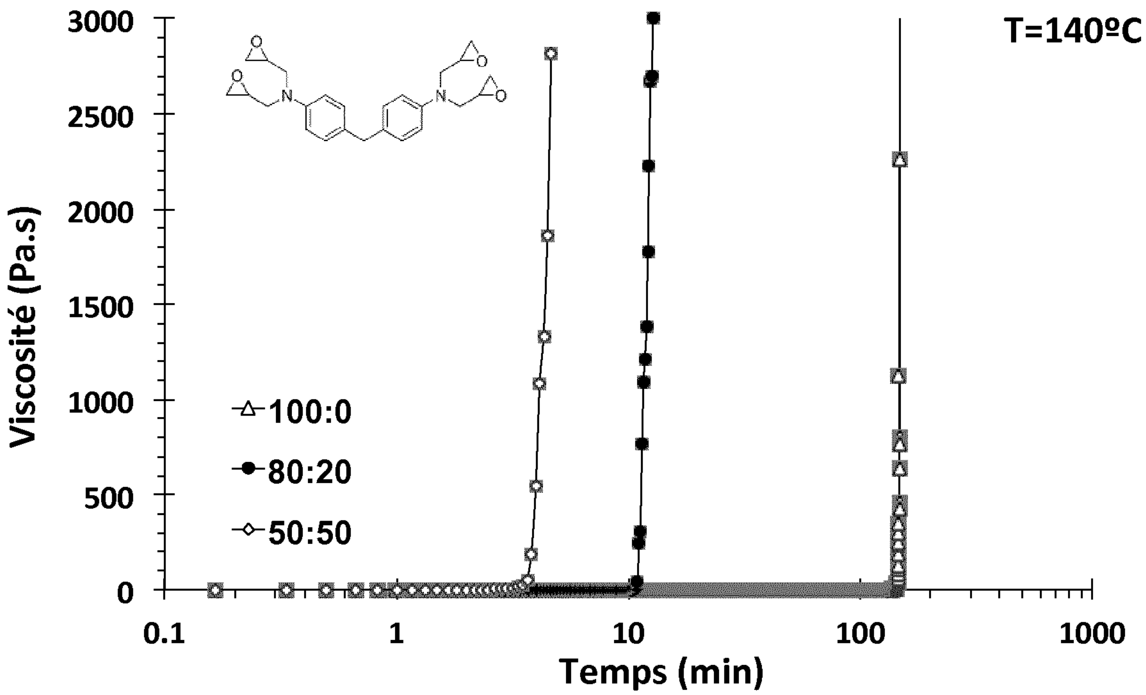
T=140ºC
Viscosité (Pa.s)
3000
2500
2000
1500
1000
500
0
100:0
80:20
50:50
0.1
1
10
100
1000
Temps (min)

FIGURE 5

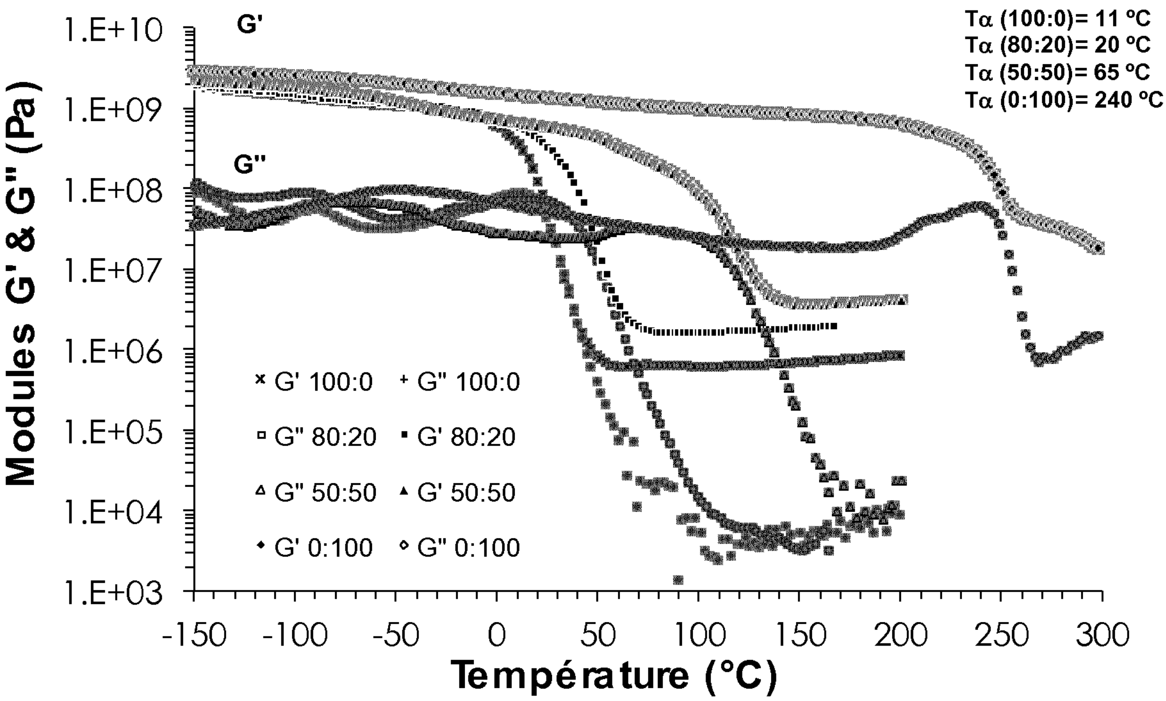
Tα (100:0)= 11 °C
Tα (80:20)= 20 °C
Tα (50:50)= 65 °C
Tα (0:100)= 240 °C
G'
G''
Modules G' & G'' (Pa)
1.E+10
1.E+09
1.E+08
1.E+07
1.E+06
1.E+05
1.E+04
1.E+03
G' 100:0
G'' 100:0
G'' 80:20
G' 80:20
G'' 50:50
G' 50:50
G' 0:100
G'' 0:100
-150
-100
-50
0
50
100
150
200
250
300
Température (°C)

FIGURE 6

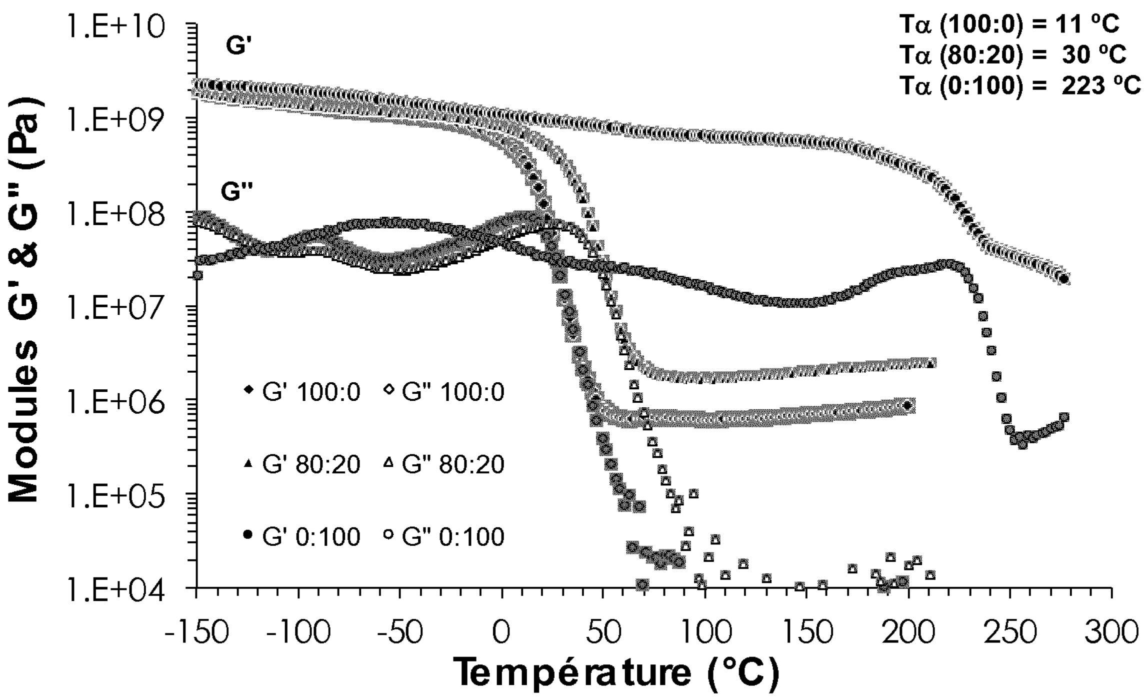
Tα (100:0) = 11 °C
Tα (80:20) = 30 °C
Tα (0:100) = 223 °C
G'
G"
1.E+10
1.E+09
1.E+08
1.E+07
1.E+06
1.E+05
1.E+04
Modules G' & G" (Pa)
G' 100:0
G" 100:0
G' 80:20
G" 80:20
G' 0:100
G" 0:100
-150
-100
-50
0
50
100
150
200
250
300
Température (°C)

FIGURE 7

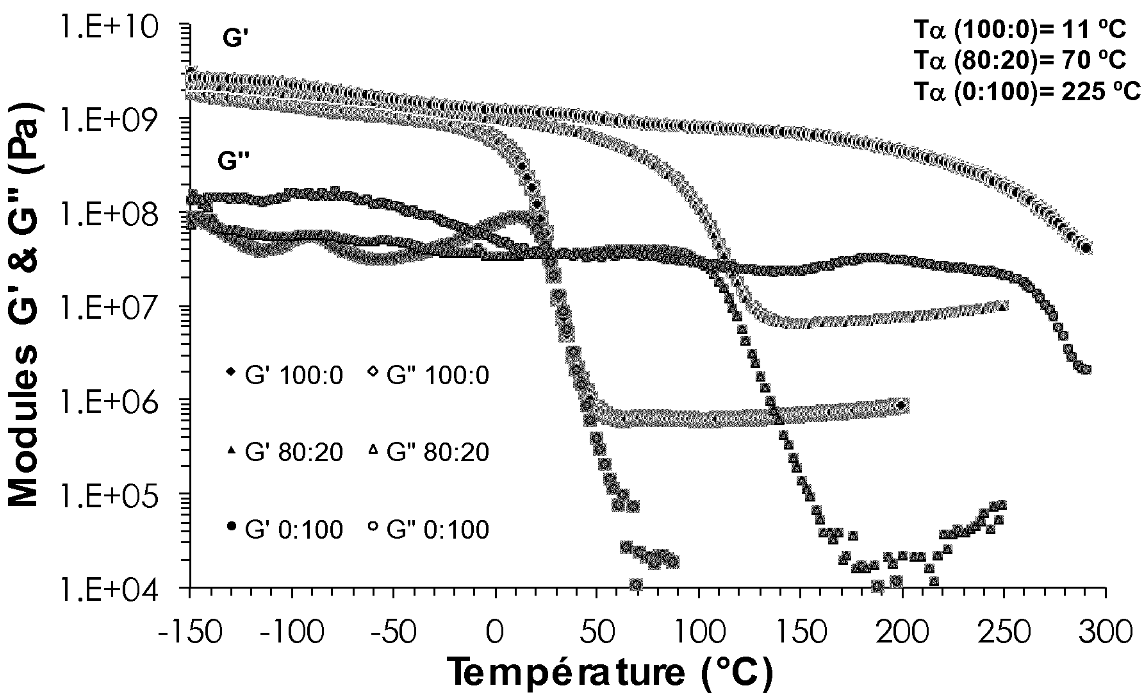
Tα (100:0)= 11 ºC
Tα (80:20)= 70 ºC
Tα (0:100)= 225 ºC
G'
G''
G' 100:0
G'' 100:0
G' 80:20
G'' 80:20
G' 0:100
G'' 0:100
1.E+10
1.E+09
1.E+08
1.E+07
1.E+06
1.E+05
1.E+04
-150
-100
-50
0
50
100
150
200
250
300
Modules G' & G'' (Pa)
Température (°C)

FIGURE 8

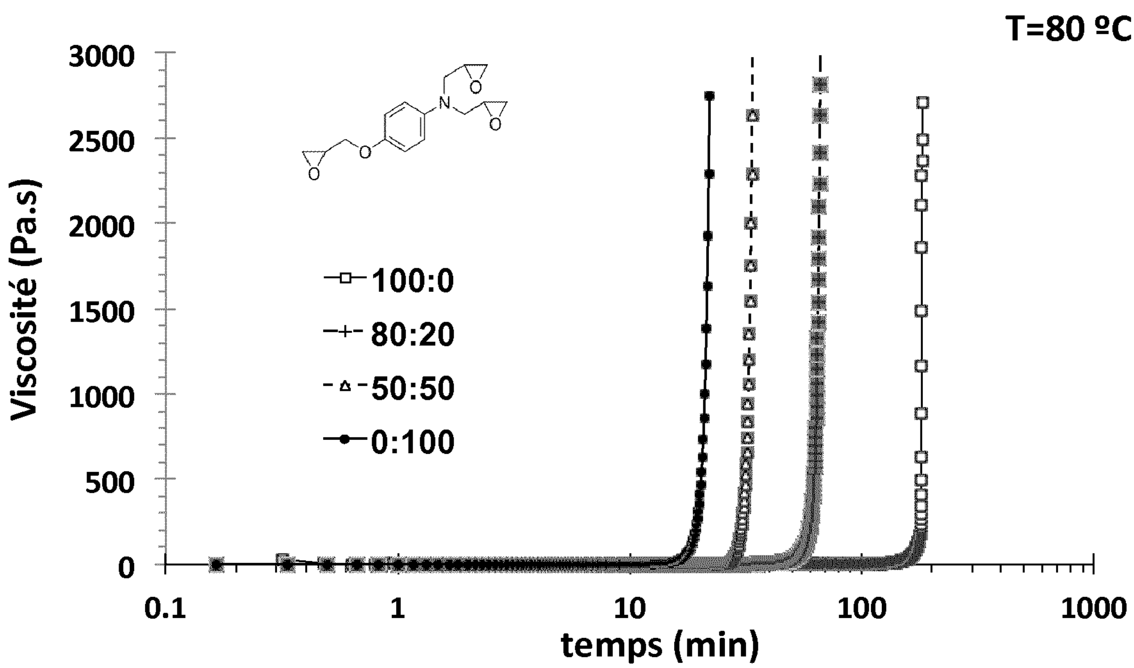
T=80 ºC
3000
2500
2000
1500
1000
500
0
Viscosité (Pa.s)
100:0
80:20
50:50
0:100
0.1
1
10
100
1000
temps (min)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2008147473 A
- WO 2010136725 A
- GB 1401677 A
- US 6468659 B
- WO 8505215 A
- US 2949441 A
- GB 1122082 A

### Littérature non-brevet citée dans la description


- **TAN S. G. et al.** *Polymer-Plastics Technology and Engineering,* 2010, vol. 49, 1581-1590
- **GERBASE A. E. et al.** *J. Am. Oil Chem. Soc.,* 2002, vol. 79, 797-802
- **BOQUILLON N. et al.** *Polymer,* 2000, vol. 41, 8603-8613
- **CHRYSANTHOS M. et al.** *Polymer,* 2011, vol. 52, 3611-3620
- **LIU et al.** *Journal of Agricultural and Food Chemistry,* 2006, vol. 54, 2134-2137